# NEW EUROPEAN PATENT SPECIFICATION

(11) **EP 2 034 035 B2**
(45) Date of publication and mention of the opposition decision: **14.09.2022**
(45) Mention of the grant of the patent: 30.03.2016
(21) Application number: 07742398.6
(22) Date of filing: 25.04.2007
(51) Int. Cl.: C22B 21/06, B22D 1/00, C22B 9/02, C22B 9/05, C22C 21/00, C22C 21/02, C22C 21/06, C22F 1/04, C22F 1/00

(54) **PROCESS FOR PRODUCING ALUMINUM ALLOY PLATE**
VERFAHREN ZUR HERSTELLUNG EINER ALUMINIUMLEGIERUNGSPLATTE
PROCÉDÉ SERVANT À PRODUIRE UNE PLAQUE D'ALLIAGE D'ALUMINIUM

(30) Priority: 18.05.2006 JP 2006139615; 18.05.2006 JP 2006139616; 18.05.2006 JP 2006139617; 18.05.2006 JP 2006139618
(43) Date of publication of application: 11.03.2009
(73) Proprietor: Kabushiki Kaisha Kobe Seiko Sho, Chuo-ku Kobe-shi Hyogo 651-8585 (JP)
(72) Inventor: KOBAYASHI, Kazunori, Tochigi 321-4367 (JP); TOKUDA, Kenji, Tochigi 321-4367 (JP); KATO, Tomoharu, Tochigi 321-4367 (JP); INABA, Takashi, Tochigi 321-4367 (JP)
(74) Representative: Müller-Boré & Partner Patentanwälte PartG mbB
(86) International application number: PCT/JP2007/058963
(87) International publication number: WO 2007/135838

(56) References cited:
- EP-A2- 1 293 579
- WO-A1-98/55663
- FR-A1- 2 805 827
- GB-A- 2 027 743
- GB-A- 2 027 744
- JP-A- 56 069 345
- JP-A- 56 069 347
- JP-A- 61 026 741
- JP-A- 61 227 142
- JP-A- 2000 265 232
- JP-A- 2003 027 167
- JP-A- 2004 306 139
- US-A- 5 338 510
- US-A- 6 004 506

## Description

### TECHNICAL FIELD

The present invention relates to a method for manufacturing an aluminium alloy thick plate.

### BACKGROUND ART

In general, aluminium alloy materials such as aluminium alloy thick plates are used for various applications: semiconductor-related apparatuses such as base substrates, transferring devices, chambers for vacuum devices and the like; electrical and electronic parts and their manufacturing devices; household items, mechanical parts, and many others.
Such aluminium alloy materials are generally produced by melting aluminium alloy ingots as a raw material, and casting the same to produce a slab, conducting a heat treatment for homogenization, if necessary, and then rolling this slab into a predetermined thickness (for example, refer to Patent document 1).

Moreover, as mold materials used for press molds, steel, cast steel, and others are used for mass production, while zinc alloy cast materials, aluminium alloy cast materials and the like are used for prototype production. Furthermore, in recent years, there has been a trend of producing multiple varieties in small amounts, and therefore ductile materials such as rolled or forged aluminium alloys for middle-scale production are widely spread.
**Patent document 1:** Japanese Unexamined Patent Publication No. 2005-344173 (refer to Paragraphs 0037 to 0045)

JP 2000-265232 A describes an aluminum alloy piston excellent in high temperature fatigue strength and wear resistance, and its manufacture. GB 2 027 744 A discloses a process for fabricating an aluminum sheet suitable for manufacturing drawn-and-ironed can bodies and can ends, comprising forming an aluminum alloy, casting said alloy into an ingot, preheating said ingot, hot rolling said ingot to a strip of cold rolling gauge, and cold rolling said strip.

### DISCLOSURE OF THE INVENTION

### PROBLEMS TO BE SOLVED BY THE INVENTION

However, the method for manufacturing aluminium alloy materials by rolling mentioned above has the following problems: In the method in which rolling is carried out after casting, control of the surface condition and flatness (especially the flatness in the longitudinal direction) of the rolled plate is carried out only by pressure rolls, and a thick oxide film is formed on the surface of the rolled plate by hot rolling, and controlling the surface condition and flatness is difficult. Moreover, since it is difficult to control the thickness of the plate by pressure rolls, there are the problems that the accuracy of plate thickness is low; the size of intermetallic compounds increases at the center of the thickness of the plate, and thus when anodization is conducted, the surface in a cross section in the thickness direction of the plate becomes uneven. Furthermore, when a slab is rolled, the number of operation steps is increased by an increase in the number of time of rolling, whereby the cost is disadvantageously increased.

The present invention has been accomplished in view of the problems mentioned above, and its object is to provide a method for manufacturing an aluminium alloy thick plate having improved accuracy of plate thickness with high productivity and good controllability of surface condition and flatness, and an aluminium alloy thick plate obtained by this manufacturing method.

### MEANS FOR SOLVING THE PROBLEMS

To achieve the objects mentioned above, the present invention relates to a method for manufacturing an aluminium alloy thick plate, the method comprising a melting step for melting an aluminium alloy; a hydrogen gas removal step for removing hydrogen gas from the aluminium alloy melted in the melting step; a filtration step for removing mediators from the aluminium alloy from which hydrogen gas has been removed in the hydrogen gas removal step; a casting step for casting the aluminium alloy from which the mediators have been removed in the filtration step to produce a slab; and a slicing step for slicing the slab in the cast direction into a predetermined thickness, which are carried out in the order stated, wherein after the slicing step, the surface of the sliced aluminium alloy thick plate having a predetermined thickness is further subjected to a surface smoothing treatment as defined in claims 1, 3 and 5.

According to such a manufacturing method, hydrogen gas is removed by the hydrogen gas removal step, whereby the concentration of hydrogen in the slab is limited. Therefore, even if grains in the slab become coarse, hydrogen is not accumulated or concentrated at the grain boundary near the surface of the slab. Accordingly, blistering of the slab and peeling of the aluminium alloy thick plate resulting from the blistering are suppressed, and potential defects on the surface of the thick plate which appear as surface defects of the thick plate are suppressed.

Furthermore, the strength of the aluminium alloy thick plate is improved. Moreover, oxides, non-metal substances and other mediators are removed from the aluminium alloy. Furthermore, by slicing the slab, the thickness of the oxide film is decreased and the surface condition, flatness and accuracy of the plate thickness of the aluminium alloy thick plate are improved, and its productivity is also improved.

According to claim 1, the aluminium alloy is composed of the following components: Mg: 1.5% by mass or more but 12.0% by mass or less; at least one member of Si: 0.7% by mass or less, Fe: 0.8% by mass or less, Cu: 0.6% by mass or less, Mn: 1.0% by mass or less, Cr: 0.5% by mass or less, Zn: 0.4% by mass or less, Ti: 0.1% by mass or less, and Zr: 0.3% by mass or less; and Al and inevitable impurities as the remainder.

In this case, the slab is preferably subjected to a heat treatment in which it is retained at a temperature ranging from 400°C to a temperature lower than its melting point for an hour or longer after the casting step.

According to such a manufacturing method, the internal stress of the aluminium alloy is removed and its inner structure is homogenized.

According to claim 3, the aluminium alloy is composed of the following components: Si: 0.2% by mass or more but 1.6% by mass or less; Mg: 0.3% by mass or more but 1.5% by mass or less; at least one member of Fe: 0.8% by mass or less, Cu: 1.0% by mass or less, Mn: 0.6% by mass or less, Cr: 0.5% by mass or less, Zn: 0.4% by mass or less, Ti: 0.1% by mass or less, and Zr: 0.3% by mass or less; and Al and inevitable impurities as the remainder.

In this case, the slab is preferably subjected to a heat treatment in which it is retained at a temperature ranging from 400°C to a temperature lower than its melting point for an hour or longer after the casting step.

According to such a manufacturing method, the internal stress of the aluminium alloy is removed and its inner structure is homogenized.

According to claim 5, the aluminium alloy is composed of the following components: Mg: 0.4% by mass or more but 4.0% by mass or less; Zn: 3.0% by mass or more but 9.0% by mass or less; at least one member of Si: 0.7% by mass or less, Fe: 0.8% by mass or less, Cu: 3.0% by mass or less, Mn: 0.8% by mass or less, Cr: 0.5% by mass or less, Ti: 0.1% by mass or less, and Zr: 0.25% by mass or less; and Al and inevitable impurities as the remainder.

In this case, the slab is preferably subjected to a heat treatment in which it is retained at a temperature ranging from 350°C to a temperature lower than its melting point for an hour or longer after the casting step.

According to such a manufacturing method, the internal stress of the aluminium alloy is removed and its inner structure is homogenized.

According to the present invention, the surface of the sliced aluminium alloy thick plate having a predetermined thickness is further subjected to a surface smoothing treatment after the slicing step.

According to such a manufacturing method, the surface condition and flatness of the aluminium alloy thick plate are further improved. Moreover, gas accumulation the surface of the thick plate is eliminated by the smoothing of the surface.

The surface smoothing treatment is preferably carried out by at least one method selected from cutting, grinding and polishing.

According to such a manufacturing method, the surface condition and flatness of the aluminium alloy thick plate are further improved. Moreover, gas accumulation is eliminated by the smoothing of the surface of the thick plate.

In the course of the present invention, there is provided an aluminium alloy thick plate manufactured by the above-mentioned method for manufacturing an aluminium alloy thick plate, wherein the amount of hydrogen gas is 0.2 ml/100 g or less, and a difference between the area fraction of intermetallic compounds in a portion near the surface and that at the center of the thickness of the plate in a cross section of the plate in its thickness direction is 10% or less.

According to such an aluminium alloy thick plate, the surface condition, flatness and accuracy of the plate thickness of the aluminium alloy thick plate are improved, and gas accumulation is eliminated by the smoothing of the surface of the thick plate.

### EFFECT OF THE INVENTION

According to a method for manufacturing an aluminium alloy thick plate of the present invention, by removing hydrogen gas, oxides, non-metal substances and - other mediators from the melted aluminium alloy having predetermined ratio of components, surface defects of the aluminium alloy thick plate can be prevented; its strength can be improved; and a high-quality slab can be produced in the casting step.

Moreover, since the aluminium alloy is produced by slicing the slab, it is not necessary to reduce its thickness by hot rolling unlike in known aluminium alloys. Therefore, simplification of operation steps can be achieved, and productivity can be improved. Moreover, unevenness of the surface at the end faces of the thick plate is eliminated; surface condition and flatness can be readily controlled; and the accuracy of the plate thickness can be improved.

Moreover, the removal of the internal stress and homogenization of the inner structure of the aluminium alloy thick plate can be achieved by subjecting the slab to a heat treatment. Accordingly, the surface condition and flatness can be improved and deformation caused when the aluminium alloy thick plate is cut can be prevented, thereby improving cutting property.

Furthermore, since the surface of the sliced aluminium alloy thick plate is subjected to a surface smoothing treatment, the surface condition and flatness of the aluminium alloy thick plate are further improved. Moreover, since gas accumulation is eliminated by smoothing the surface, when the aluminium alloy thick plate is used for a chamber for vacuum devices, the degree of vacuum in the chamber is improved.

Furthermore, a high-quality aluminium alloy thick plate in which the condition of the surface, flatness and the accuracy of the plate thickness of the aluminium alloy thick plate are good and gas accumulation is eliminated by smoothing the surface can be provided. In addition, unevenness in the appearance of the surface after being subjected to anodization in a cross section of the plate in the thickness direction is less likely to occur. Accordingly, the plate can be used for various applications, and can be also recycled for other applications.

### BRIEF DESCRIPTION OF THE DRAWINGS

**[Fig. 1]** Fig. 1 is a flowchart of the method for manufacturing an aluminium alloy thick plate.

### EXPLANATION OF REFERENCE NUMERALS

| | |
|---|---|
| S1 | Melting step |
| S2 | Hydrogen gas removal step |
| S3 | Filtration step |
| S4 | Casting step |
| S5 | Heat treatment step |
| S6 | Slicing step |
| S7 | Surface smoothing treatment step |

### BEST MODE FOR CARRYING OUT THE INVENTION

### First embodiment (not in accordance with the present invention)

The method for manufacturing an aluminium alloy thick plate will be now described in detail with reference to drawings. In the drawings to be referenced, Fig. 1 is a flowchart of the method for manufacturing an aluminium alloy thick plate.

As shown in Fig. 1, the method for manufacturing an aluminium alloy thick plate (hereinafter referred to as "thick plate" for convenience) comprises a melting step (S1), a hydrogen gas removal step (S2), a filtration step (S3), a casting step (S4), and a slicing step (S6), which are carried out in the order stated, wherein after the slicing step, the surface of the sliced aluminium alloy thick plate having a predetermined thickness is further subjected to a surface smoothing treatment (S7). Moreover, the method may comprise, if necessary, a heat treatment step (S5) after the casting step (S4).

In this manufacturing method, first, a raw material, that is, an aluminium alloy is melted in the melting step (S1). Hydrogen gas is removed from the aluminium alloy melted in the melting step (S1) in the hydrogen gas removal step (S2), and oxides, non-metal substances and other mediators are removed from the same in the filtration step (S3). Second, this aluminium alloy is cast in the casting step (S4) to be a slab. This slab is subjected to a heat treatment, if necessary, in the heat treatment step (S5), and is then sliced into a predetermined thickness in the slicing step (S6). A surface smoothing treatment is carried out in the surface smoothing treatment step (S7) after the slicing step (S6).

Each of the steps in the method for manufacturing an aluminium alloy thick plate will be described now.

### <Melting step>

The melting step (S1) is a step for melting an aluminium alloy containing a predetermined amount of Mn, a predetermined amount of at least one member of Si, Fe, Cu, Mg, Cr, Zn, Ti, and Al and inevitable impurities as the remainder. The reason why the numerical value of the amount of each component contained is limited will be described below.

### [Mn: 0.3% by mass or more but 1.6% by mass or less]

Mn has a function to improve the strength of the aluminium alloy when it is in solution therein. When the amount of Mn contained is less than 0.3% by mass, this effect is low. In contrast, when the amount of Mn contained is greater than 1.6% by mass, coarse intermetallic compounds are produced, and therefore irregularity in the appearance of the surface of the thick plate after being anodized is likely to occur. Accordingly, the amount of Mn contained is to be 0.3% by mass or more but 1.6% by mass or less.

The aluminium alloy contains Mn mentioned above as an essential component, and further contains at least one of Si, Fe, Cu, Mg, Cr, Zn and Ti described below.

### [Si: 0.7% by mass or less]

Si has a function to improve the strength of the aluminium alloy. Si is normally contained in the aluminium alloy as an impurity in the ingot, and produces Al-(Fe)-(Mn)-Si-based intermetallic compounds together with Mn and Fe in the slab in the casting step (S4) and other steps. When the amount of Si contained is more than 0.7% by mass, coarse intermetallic compounds are produced in the slab, and irregularity in the appearance of the surface of the thick plate after being anodized is likely to occur. Accordingly, the amount of Si contained is to be 0.7% by mass or less.

### [Fe: 0.8% by mass or less]

Fe has a function to micronize and stabilize grains of the aluminium alloy, and improve their strength. Fe is also contained normally in the aluminium alloy as an impurity in the ingot, and produces Al-Fe-(Mn)-(Si)-based intermetallic compounds together with Mn and Si in the slab in the casting step (S4) and other steps. When the amount of Fe contained is greater than 0.8% by mass, coarse intermetallic compounds are produced in the slab, and irregularity in the appearance of the surface of the thick plate after being anodized is likely to occur. Accordingly, the amount of Fe contained is to be 0.8% by mass or less.

### [Cu: 0.5% by mass or less]

Cu has a function to improve the strength of the aluminium alloy plate. However, the amount of Cu contained of 0.5% by mass suffices to ensure a strength which can endure the use as a thick plate. Accordingly, the amount of Cu contained is to be 0.5% by mass or less.

### [Mg: 1.5% by mass or less]

Mg has a function to improve the strength of the aluminium alloy. However, the amount of Mg contained of 1.5% by mass suffices to ensure a strength which can endure the use as a thick plate. Accordingly, the amount of Mg contained is to be 1.5% by mass or less.

### [Cr: 0.3% by mass or less]

Cr has a function to suppress the growth of grains by being deposited as a fine compound in the casting step (S4) and heat treatment step (S5). When the amount of Cr contained is greater than 0.3% by mass, a coarse Al-Cr-based intermetallic compound is produced as primary crystal, and irregularity in the appearance of the surface of the thick plate after being anodized is likely to occur. Accordingly, the amount of Cr contained is to be 0.3% by mass or less.

### [Zn: 0.4% by mass or less]

Zn has a function to improve the strength of the aluminium alloy. However, the amount of Zn contained of 0.4% by mass suffices to ensure a strength which can endure the use as a thick plate. Accordingly, the amount of Zn contained is to be 0.4% by mass or less.

### [Ti: 0.1% by mass or less]

Ti has a function to micronize the grains of the slab. When the amount of Ti contained is greater than 0.1% by mass, its effect is saturated. Accordingly, the amount of Ti contained is to be 0.1% by mass or less.

### [Zr: 0.3% by mass or less]

Zr has a function to micronize and stabilize the grains of the aluminium alloy. When the amount of Zr contained is greater than 0.3% by mass, coarse intermetallic compounds are produced, and irregularity in the appearance of the surface of the thick plate after being anodized is likely to occur. Accordingly, the amount of Zr contained is to be 0.3% by mass or less.

The amounts of V, B and other elements contained as inevitable impurities do not affect the characteristics of the aluminium alloy thick plate as long as they are 0.01% by mass or less, respectively.

### <Hydrogen gas removal step>

The hydrogen gas removal step (S2) is a step for removing hydrogen gas from the aluminium alloy melted in the melting step (S1).

Hydrogen gas is generated from hydrogen in a fuel, moisture deposited on the ingot and the like, and other organic matters. When a large amount of hydrogen gas is contained, it may cause pin holes, and the strength of the product is lowered. Moreover, hydrogen is accumulated or concentrated at the grain boundary near the surface of the slab, and blisters are generated when the slab is processed into an aluminium alloy thick plate, and potential defects which appear as surface defects of the thick plate are produced on the surface of the thick plate.

Accordingly, the amount of hydrogen gas is preferably 0.2 ml or less, and more preferably 0.1 ml or less in 100 g of the aluminium alloy.

Removal of hydrogen gas in the hydrogen gas removal step can be suitably carried out by subjecting a molten metal to a fluxing process, chlorine refining, in line refining or other method, but it can be more suitably removed by using a SNIF (Spinning Nozzle Inert Flotation) and a porous plug; refer to Japanese Unexamined Patent Publication No. 2002-146447) in a hydrogen gas removing apparatus.

Herein, the concentration of hydrogen gas in the slab can be determined by, for example, cutting out a sample from the slab before being subjected to a heat treatment for homogenization, subjecting the sample to ultrasound wave cleaning with alcohol and acetone, and analyzing the resulting sample by, for example, the inert gas fusion thermal conductivity method (LIS AO6-1993). Moreover, the concentration of hydrogen in the aluminium alloy thick plate can be determined by, for example, cutting out a sample from the aluminium alloy thick plate, immersing the sample in NaOH, removing an oxide film on the surface of the sample with nitric acid, subjecting the sample to ultrasound wave cleaning with alcohol and acetone, and analyzing the resulting sample by the vacuum heat extraction capacitance method (LIS AO6-1993).

### <Filtration step>

The filtration step (S3) is a step for removing mainly oxide and non-metal mediators from the aluminium alloy.

The filtrating apparatus is provided with, for example, a ceramic tube in which alumina particles of about 1 mm are used, and the oxide and mediators can be removed by causing molten metal to run through this.

Because of this hydrogen-free gas and by filtration, in the casting step (S4), an aluminium alloy with high quality ensured can be made into a slab. Since dross of oxide can be also suppressed, the trouble of removing dross can be reduced.

### <Casting step>

The casting step (S4) is a step for producing a slab by forming a molten metal of the aluminium alloy with, for example, a casting apparatus constituted to comprise a water-cooled mold into a predetermined shape such as a rectangular , parallelepiped and hardening the metal.

The semi-continuous casting method can be used as the casting method.

In the semi-continuous casting method, a molten metal is injected into a metallic water-cooled mold having an open bottom from above, and the solidified metal is successively withdrawn from the bottom of the water-cooled mold to obtain slabs having predetermined thickness. The semi-continuous casting method may be carried out vertically or horizontally.

### <Slicing step>

The slicing step (S6) is a step for slicing the slab cast in the casting step (S4) into a predetermined thickness.

The slab slicing method can be used as the slicing method.

The slab slicing method is a method for cutting out the slab in the cast direction by slicing the slab produced by the above-mentioned semi-continuous casting method with a band saw cutting apparatus or the like, and aluminium alloy thick plate having a predetermined thickness is thus produced. Herein, the thickness of the aluminium alloy thick plate is preferably 15 to 200 mm, but it is not particularly limited, and can be varied suitably depending on the use of the aluminium alloy thick plate.

A band saw is preferably used in the slicing method, but it is not particularly limited, and cutting may be also performed by a circular saw cutting apparatus. Moreover, the slab may be cut by laser, water pressure or by other means.

As mentioned above, by slicing the slab, in comparison with a rolled material, an aluminium alloy thick plate having excellent surface condition, flatness, accuracy of the plate thickness and other properties, for example, a thick plate having a flatness (amount of warping) per 1 m in the casting direction of 0.4 mm or less/1 m length in the evaluation of flatness, and the accuracy of the plate thickness of ±100 µm or lower can be obtained.

Before slicing the slab produced in the casting step (S4), an appropriate heat treatment, if necessary, for the purpose of removing internal stress and homogenizing the inner structure may be carried out.

### <Heat treatment step>

The heat treatment step (S5) is a step for subjecting the slab produced in the casting step (S4) to a heat treatment (heat treatment for homogenization).

The heat treatment for homogenization is carried out by retaining the slab at a treatment temperature of 400 to 630°C for an hour or longer according to a common method.

When the treatment temperature of the heat treatment for homogenization is lower than 400°C, the inner stress is less removed and the homogenization of a solute element, which is segregated during casting, is insufficient, therefore the effect of the heat treatment which is dared to be performed is small. Therefore, the treatment temperature is to be 400°C or higher. Moreover, when the treatment temperature is higher than 630°C, a phenomenon called burning occurs, in which part of the surface of the slab is melted, which is apt to be a cause of a defect on the surface of the aluminium alloy thick plate. Therefore, the treatment temperature is to be 630°C or lower. Moreover, when the treatment time is less than 1 hour, solid dissolution of intermetallic compounds becomes insufficient, and the intermetallic compounds are likely to deposit. Therefore, the treatment time is to be 1 hour or longer.

The aluminium alloy thick plate produced by the manufacturing method is subjected to a surface smoothing treatment to remove intermetallic compounds and oxides formed on the surface of the thick plate and eliminate gas accumulation the surface of the thick plate.

### <Surface smoothing treatment step>

The surface smoothing treatment step (S7) is a step for smoothing the surface of the sliced aluminium alloy thick plate in the slicing step (S6).

As for surface smoothing treatment, a cutting method such as an end mill cutting, a diamond bite cutting; a grinding method which faces a surface by a grind rocks or the like; and a polishing method such as buffing, or the like, can be adopted; however, methods for surface smoothing treatment are not limited thereto.

Herein, one of the uses of the aluminium alloy thick plate, a chamber for vacuum devices, suffers from an decrease in the degree of vacuum therein caused by, when the chamber is decompressed to attain high vacuum, releasing of adsorbed gas from the inner surface of the chamber and releasing of gas atoms which are solidly dissolved in the thick plate onto the surface. Accordingly, the time which takes to reach a target degree of vacuum is extended, thereby lowering production efficiency. Accordingly, the following conditions are required for the aluminium alloy thick plate used for a chamber: the amount of gas which adsorbs onto the surface of the thick plate positioned in an inner portion of the chamber is low; and the gas atoms which are solidly dissolved in the thick plate are not released even in high vacuum.

The aluminium alloy thick plate obtained by the manufacturing method mentioned above has good surface condition, flatness and accuracy of the plate thickness, as described above. Accordingly, it can be used for semiconductor-related apparatuses such as base substrates, transferring devices, chamber for vacuum devices, electrical and electronic parts and their manufacturing devices, household items, mechanical parts and many other applications, and can be also recycled for other applications.

The aluminium alloy thick plate obtained by the method will be described now.

### <Aluminium alloy thick plate>

The aluminium alloy thick plate comprises the above-mentioned aluminium alloy (Al-Mn-based alloy), in which the concentration of hydrogen is 0.2 ml/100 g or lower, and a difference between the area fraction of intermetallic compounds in a portion near the surface and that at the center of the thickness of the plate in a cross section in the thickness direction of the plate is 10% or less.

Controlling of the concentration of hydrogen can be also conducted by the manufacturing method mentioned above.

Herein, since the color tone of the thick plate after being anodized varies depending on the area fraction of the Al-Fe-Mn-based intermetallic compounds, irregularity of color tone occurs in the thick plate after being anodized when the difference in area fraction is greater than 10%. In contrast, when the difference is 10% or lower, no irregularity in color tone occurs.

That is, in case of a rolled material, since the size of the intermetallic compounds increases at the center of the thickness of the plate, irregularity in color tone occurs in a cross section when the thick plate is anodized, but when the thick plate is sliced out from the slab, the distribution state of the intermetallic compounds is averaged, and the difference in area fraction between the intermetallic compounds near the surface and at the center in the thickness direction is small. Therefore, no irregularity in color tone occurs.

Measurement of such area fraction is carried out by determining the area fractions of the intermetallic compounds in a portion near the surface of the plate thickness in a cross section in the thickness direction of the plate (for example, defined as a position which is 1/8 the thickness of the plate) and at the center of the thickness of the plate (for example, defined as a position which is 1/2 the thickness of the plate).

Specifically, the area fractions of the Al-Fe-Mn-based intermetallic compounds in a cross section in the thickness direction of the plate are determined by image processing of an SEM composition image at a magnification of 1000X and a field of view of 20 fields or more.

As for corrosion resistance, since thick plates for base substrates and for transferring devices are used in clean rooms, they are not required to have generic corrosion resistance. Moreover, even when the thick plate is used for a chamber for vacuum devices, high corrosion resistance is unnecessary since the environment hardly causes the thick plate to be exposed to a corrosive gas.

The effects of the following Examples 1 and 2 which are Reference Examples not falling within the scope of the claims of the present invention will be described now in detail in comparison with Comparative Examples which also fall outside the scope of claims of the present invention.

### [Example 1]

Initially, aluminium alloys having the chemical compositions shown in Table 1 were melted, and the molten metals were subjected to a hydrogen gas removal process and filtration. The molten metals were then cast to produce slabs having a thickness of 500 mm. The produced slabs were heated at 580°C for 4 hours to carry out a heat treatment for homogenization. These slabs were sliced or hot-rolled, giving aluminium alloy thick plates (sliced materials, hot rolled materials) having a thickness of 20 mm.

These sliced materials and hot rolled materials were tested for their properties described below.

### <Flatness evaluation test>

In the flatness evaluation, the sliced materials were tested to determine their amounts of warping (flatness) per 1 m in the cast direction, while the hot rolled materials were tested to determine their amounts of warping (flatness) per 1 m in the rolling direction. The materials having a flatness of 0.4 mm /1 m length or lower were judged acceptable (o), while those having a flatness higher than 0.4 mm /1 m length were judged unacceptable (x). The results are shown in Table 2.

### <Strength test>

The strength test was conducted by preparing test pieces defined by JIS No. 5 from the aluminium alloy thick plate s to perform tensile test thereon, and determine their tensile strength and 0.2% stress resistance.

Test pieces having a tensile strength of 90 N/mm² or higher were judged acceptable (o), while those having a tensile strength lower than 90 N/mm² were judged unacceptable (x).

### <Anodizability evaluation test>

Anodizability evaluation was conducted by observing the appearances of the surfaces and cross sections of the aluminium alloy thick plates.

Anodized aluminium films having a thickness of 10 µm were formed on the surfaces and cross sections of aluminium alloy thick plates (sliced materials, hot rolled materials) by the sulfuric acid anodization (15% sulfuric acid, 20°C, current density: 2 A/dm²). The appearances of the surfaces and cross sections of these thick plates were observed, and the thick plates having no irregularity in their appearances were judged acceptable (○), while those having irregularity were judged unacceptable (×).

Since the difference between the area fraction of intermetallic compounds in a portion near the surface and that at the center of the thickness of the plate in a cross section in the thickness direction of the plate affects the anodizability, the area fractions of the intermetallic compounds in the portion near the surface and at the center of the thickness of the plate were determined.

Measurement of area fractions were conducted by determining the area fractions of intermetallic compounds in a portion near the surface in a cross section in the thickness direction of the plate (1/8 position) and at the center of the thickness of the plate (1/2 position) by image processing of an SEM composition image at a magnification of 1000X and a field of view of 20 fields or more. The results are shown in Table 2.

### [Example 2]

Initially, the aluminium alloy (alloy component 2) having the ratio of constituents of No. 2 shown in Table 1 was melted, and the solution was subjected to a hydrogen gas removal process and filtration. The solution was then cast to produce a slab having a thickness of 500 mm. The produced slab was subjected to a heat treatment for homogenization under the conditions shown in Table 3. This slab was sliced to produce an aluminium alloy thick plate (sliced material) having a thickness of 20 mm.

This sliced material was subjected to flatness evaluation test.

### <Flatness evaluation test>

In the flatness evaluation, the amount of warping (flatness) per 1 m in the cast direction was determined. The plates having a flatness of 0.4 mm /1 m length or lower were judged acceptable (○), while those having a flatness of 0.25 mm /1 m length or lower were judged excellent (ⓞ). The results are shown in Table 3.

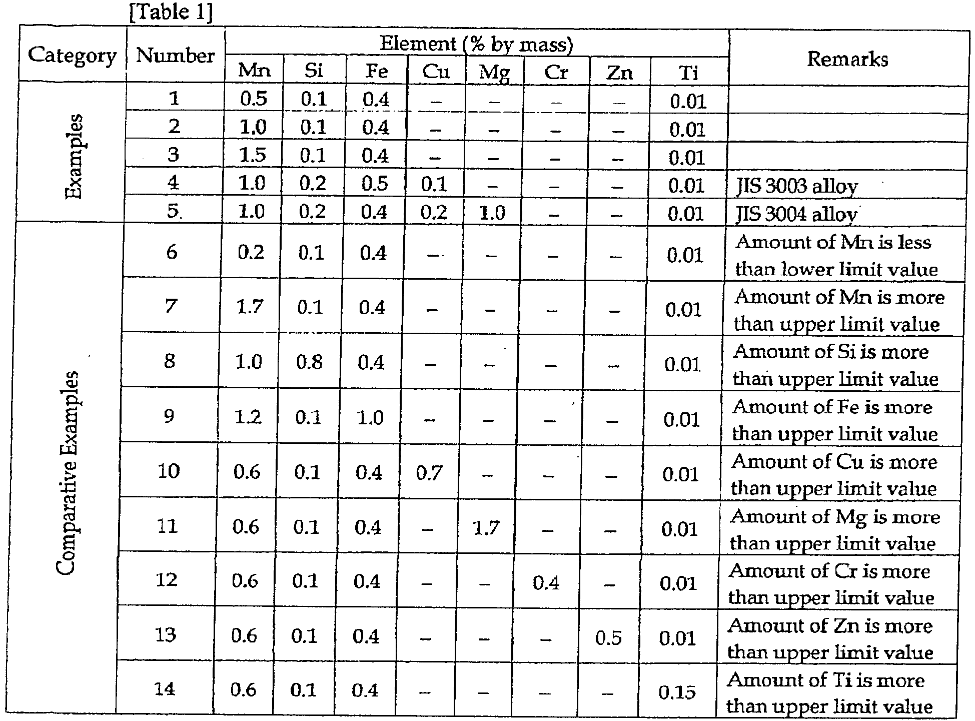

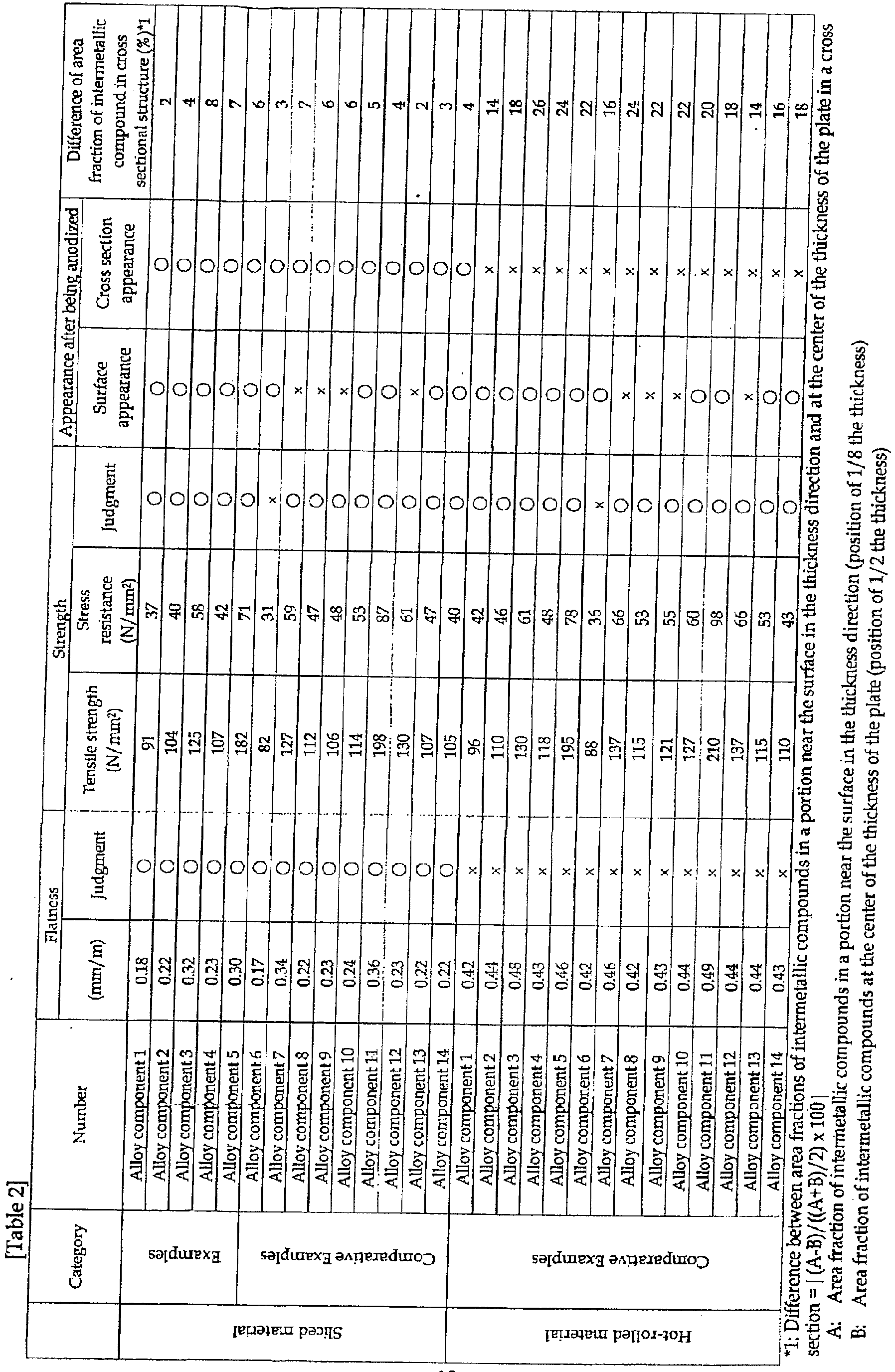

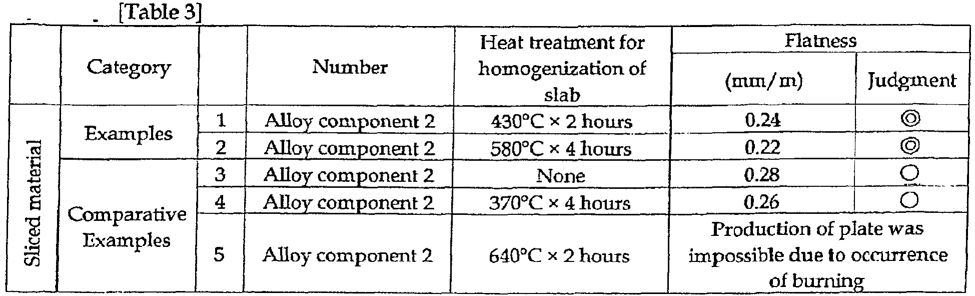

As shown in Table 2, the sliced materials (alloy components 1 to 14) had little process deformation and little warping. That is, their flatness was good.

In alloy component 6, strength was insufficient because the amount of Mn contained was lower than the lower limit value.

Alloy components 1 to 6, 10, 11, 13 and 14 had no irregularity in the appearances of the surfaces of the aluminium alloy thick plates after being anodized.

Alloy components 7, 8, 9 and 12 contained Mn, Si, Fe and Cr in amounts greater than the respective upper limit values, and therefore intermetallic compounds were produced therein and irregularity occurred in the appearances of their surfaces after being anodized.

As for alloy components 1 to 14, no irregularity occurred in the appearances of the cross sections of the resulting aluminium alloy thick plates after being anodized.

Meanwhile, the hot rolled materials (alloy components 1 to 14) had accumulated process deformation and large degree of warping. That is, their flatness was poor.

In alloy component 6, strength was insufficient because the amount of Mn contained was lower than the lower limit value.

Alloy components 7, 8, 9 and 12 contained Mn, Si, Fe and Cr in amounts greater than the respective upper limit values, and therefore intermetallic compounds were produced therein and irregularity occurred in the appearances of their surfaces after being anodized.

As for alloy components 1 to 14, irregularity occurred in the appearances of the cross sections of the resulting aluminium alloy thick plates after being anodized.

Moreover, the hot-rolled materials which were produced by hot rolling had the difference between the area fraction of the intermetallic compounds in the portion near the surface and that at the center of the thickness of the plate in a cross section of the plate in the thickness direction greater than 10%.

Alloy components 10, 11, 13 and 14 of sliced materials contained Cu, Mg, Zn and Ti in amounts greater then the respective upper limit values, and therefore their effects were saturated and their economical efficiencies are poor.

As shown in Table 3, in Examples 1 and 2, their flatness was good. In Example 3, no heat treatment for homogenization was carried out. Therefore, its flatness was slightly lower than those which were subjected to a heat treatment for homogenization, although it had an acceptable value. In Example 4, since the treatment temperature in the heat treatment for homogenization was lower than 400°C, its flatness was slightly lower than that of those which met the condition of the treatment temperature, although it had an acceptable value. In Example 5, since the treatment temperature of the heat treatment for homogenization was higher than 630°C, burning occurred and production was impossible.

### Second embodiment (in accordance with the present invention)

The method for manufacturing a thick plate according to claim 1 comprises, as shown in Fig. 1, a melting step (S1), a hydrogen gas removal step (S2), a filtration step (S3), a casting step (S4), and a slicing step (S6), which are carried out in the order stated, wherein after the slicing step, the surface of the sliced aluminium alloy thick plate having a predetermined thickness is further subjected to a surface smoothing treatment (S7). Moreover, the method may comprise, if necessary, a heat treatment step (S5) after the casting step (S4).

Among these steps, the hydrogen gas removal step (S2), filtration step (S3), casting step (S4), slicing step (S6), and the surface smoothing treatment step (S7) are the same as in the manufacturing method of the first embodiment, which is not in accordance with the present invention, and therefore their explanation will be omitted. Only the melting step (S1) and the heat treatment step (S5) will be described below.

### <Melting step>

The melting step (S1) is a step for melting an aluminium alloy containing a predetermined amount of Mg; a predetermined amount of at least one member of, Si, Fe, Cu, Mn, Cr, Zn and Ti; and, Al and inevitable impurities as the remainder.

The reason why the numerical value of the amount of each component contained is limited will be described below.

### [Mg: 1.5% by mass or more but 12.0% by mass or less]

Mg has a function to improve the strength of the aluminium alloy. When the amount of Mg contained is less than 1.5% by mass, this effect is low. In contrast, when the amount of Mg contained is greater than 12.0% by mass, castability is significantly lowered, and production of products becomes impossible.

The aluminium alloy contains Mg mentioned above as an essential component, and further at least one member of Si, Fe, Cu, Mn, Cr, Zn and Ti described below.

### [Si: 0.7% by mass or less]

Si has a function to improve the strength of the aluminium alloy. Si is normally contained in the aluminium alloy as an impurity in the ingot, and produces an Al-(Fe)-(Mn)-Si-based intermetallic compound together with Mn and Fe in the slab in the casting step (S4) and other steps. When the amount of Si contained is more than 0.7% by mass, coarse intermetallic compounds are produced in the slab, and irregularity in the appearance of the surface of the thick plate after being anodized is likely to occur. Accordingly, the amount of Si contained is to be 0.7% by mass or less.

### [Fe: 0.8% by mass or less]

Fe has a function to micronize and stabilize grains of the aluminium alloy, and improve its strength. Fe is also contained normally in the aluminium alloy as an impurity in the ingot, and produces an Al-Fe-(Mn)-(Si)-based intermetallic compound together with Mn and Si in the slab in the casting step (S4) and other steps. When the amount of Fe contained is greater than 0.8% by mass, coarse intermetallic compounds are produced in the slab, and irregularity in the appearance of the surface of the thick plate after being anodized is likely to occur. Accordingly, the amount of Fe contained is to be 0.8% by mass or less.

### [Cu: 0.6% by mass or less]

Cu has a function to improve the strength of the aluminium alloy plate. However, the amount of Cu contained of 0.6% by mass suffices to ensure a strength which can endure the use as a thick plate. Accordingly, the amount of Cu contained is to be 0.6% by mass or less.

### [Mn: 1.0% by mass or less]

Mn has a function to solidly dissolve in the aluminium alloy and improve its strength. Meanwhile, when the amount of Mn contained is greater than 1.0% by mass, coarse intermetallic compounds occur, and irregularity in the appearance of the surface of the thick plate after being anodized is likely to occur. Accordingly, the amount of Mn contained is to be 1.0% by mass or less.

### [Cr: 0.5% by mass or less]

Cr has a function to suppress the growth of grains by being deposited as a fine compound in the casting step (S4) and heat treatment step (S5). When the amount of Cr contained is greater than 0.5% by mass, a coarse Al-Cr-based intermetallic compound is produced as primary crystal, and irregularity in the appearance of the surface of the thick plate after being anodized is likely to occur. Accordingly, the amount of Cr contained is to be 0.5% by mass or less.

### [Zn: 0.4% by mass or less]

Zn has a function to improve the strength of the aluminium alloy. However, to ensure a strength which can endure the use as a thick plate, the amount of Zn contained of 0.4% by mass suffices. Accordingly, the amount of Zn contained is to be 0.4% by mass or less.

### [Ti: 0.1% by mass or less]

Ti has a function to micronize the grains of the slab. When the amount of Ti contained is greater than 0.1% by mass, its effect is saturated. Accordingly, the amount of Ti contained is to be 0.1% by mass or less.

### [Zr: 0.3% by mass or less]

Zr has a function to micronize and stabilize the grains of the aluminium alloy. When the amount of Zr contained is greater than 0.3% by mass, coarse intermetallic compounds are produced, and irregularity in the appearance of the surface of the thick plate after being anodized is likely to occur. Accordingly, the amount of Zr contained is to be 0.3% by mass or less.

Moreover, the amounts of V, B and other elements contained as inevitable impurities do not affect the characteristics of the aluminium alloy thick plate of the present invention as long as they are 0.01% by mass or less, respectively.

### <Heat treatment step>

The heat treatment step (S5) is a step for subjecting the slab produced in the casting step (S4) to a heat treatment (heat treatment for homogenization).

The heat treatment for homogenization is carried out by retaining the slab at a treatment temperature ranging from 400°C to a temperature lower than its melting point for an hour or longer according to a common method.

When the treatment temperature of the heat treatment for homogenization is lower than 400°C, the amount of removal of the internal stress is small, and the inner stress is less removed and the homogenization of a solute element, which is segregated during casting, is insufficient. Therefore, the effect of the heat treatment which is dared to be performed is small. Therefore, the treatment temperature is to be 400°C or higher. Moreover, when the treatment temperature is higher than the melting point, a phenomenon called burning occurs, in which part of the surface of the slab is melted, which is apt to be a cause of a defect on the surface of the aluminium alloy thick plate. Accordingly, the treatment temperature is to be the melting point or lower. Moreover, when the treatment time is less than 1 hour, solid dissolution of intermetallic compounds becomes insufficient, and the intermetallic compounds are likely to deposit. Therefore, the treatment time is to be 1 hour or longer.

An aluminium alloy thick plate obtained by the second embodiment of the present invention will be described now.

### <Aluminium alloy thick plate>

The aluminium alloy thick plate comprises the above-mentioned aluminium alloy (Al-Mg-based alloy), in which the concentration of hydrogen is 0.2 ml/100 g or lower, and a difference between the area fraction of the intermetallic compound in a portion near the surface and that at the center of the thickness of the plate in a cross section in the thickness direction of the plate is 10% or less.

Controlling of the concentration of hydrogen can be also conducted by the manufacturing method mentioned above.

Herein, since the color tone of the thick plate after being anodized varies depending on the area fraction of the Al-Fe-Mn-based intermetallic compounds, irregularity of color tone occurs in the thick plate after being anodized when the difference in area fraction is greater than 10%. In contrast, when the difference is 10% or lower, no irregularity in color tone occurs.

That is, in case of a rolled material, since the size of intermetallic compounds increases at the center of the thickness of the plate, irregularity in color tone occurs in a cross section when the thick plate is anodized. In contrast, when the thick plate is sliced out from the slab, the distribution state of the intermetallic compounds is averaged, and the difference in area fraction between the intermetallic compounds near the surface and at the center in the thickness direction is small, and therefore no irregularity in color tone occurs.

Measurement of such area fraction is carried out by determining the area fractions of the intermetallic compounds in a portion near the surface of the plate thickness in a cross section in the thickness direction of the plate (for example, defined as a position which is 1/8 the thickness of the plate) and at the center of the thickness of the plate (for example, defined as a position which is 1/2 the thickness of the plate).

Specifically, in a cross section in the thickness direction of the plate, the area fractions of an Al-Fe-Mn-based intermetallic compound are determined by image processing of an SEM composition image at a magnification of 1000X and a field of view of 20 fields or more.

As for corrosion resistance, since thick plates for base substrates and for transferring devices are used in clean rooms, they are not required to have generic corrosion resistance. Moreover, even when the thick plate is used for a chamber for vacuum devices, high corrosion resistance is unnecessary since the environment hardly causes the thick plate to be exposed to a corrosive gas.

A suitable embodiment of the present invention has been described above, but the present invention is not limited to this embodiment.

The effects of Examples which fall within the scope of claims of the present invention will be described now in detail in comparison with Comparative Examples which fall outside the scope of claims of the present invention.

### [Example 3]

Initially, aluminium alloys having the chemical compositions shown in Table 4 were melted, and the molten metals were subjected to a hydrogen gas removal process and filtration. The molten metals were then cast to produce slabs having a thickness of 500 mm. The produced slabs were heated at 500°C for 4 hours to carry out a heat treatment for homogenization. These slabs were sliced or hot-rolled, giving aluminium alloy thick plates having a thickness of 20 mm (sliced materials, hot rolled materials).

These sliced materials and hot-rolled materials were subjected to flatness evaluation test, strength test, and anodizability evaluation test.

Since the tests are the same as those described in the first embodiment, their explanation is omitted here. However, in the strength test, the materials having a tensile strength of 180 N/mm² or higher were judged acceptable (o), while those having a tensile strength lower than 180 N/mm² were judged unacceptable (x). The results are shown in Table 5.

### [Example 4]

Initially, an aluminium alloy (alloy component 3) having the ratio of constituents of No. 3 shown in Table 4 was melted, and the solution was subjected to a hydrogen gas removal process and filtration. The solution was then cast to produce a slab having a thickness of 500 mm. The produced slab was subjected to a heat treatment for homogenization under the conditions shown in Table 6. This slab was sliced to produce an aluminium alloy thick plate (sliced material) having a thickness of 20 mm.

This sliced material was subjected to flatness evaluation test. Since this test is the same as that described in the first embodiment, its explanation is omitted here. The results are shown in Table 6.

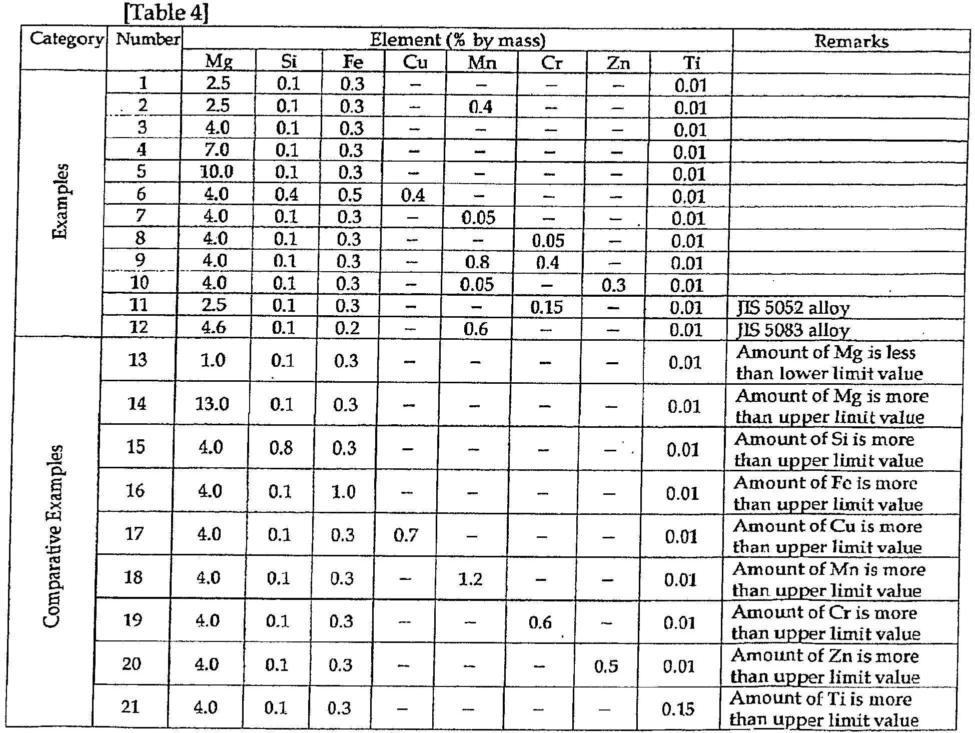

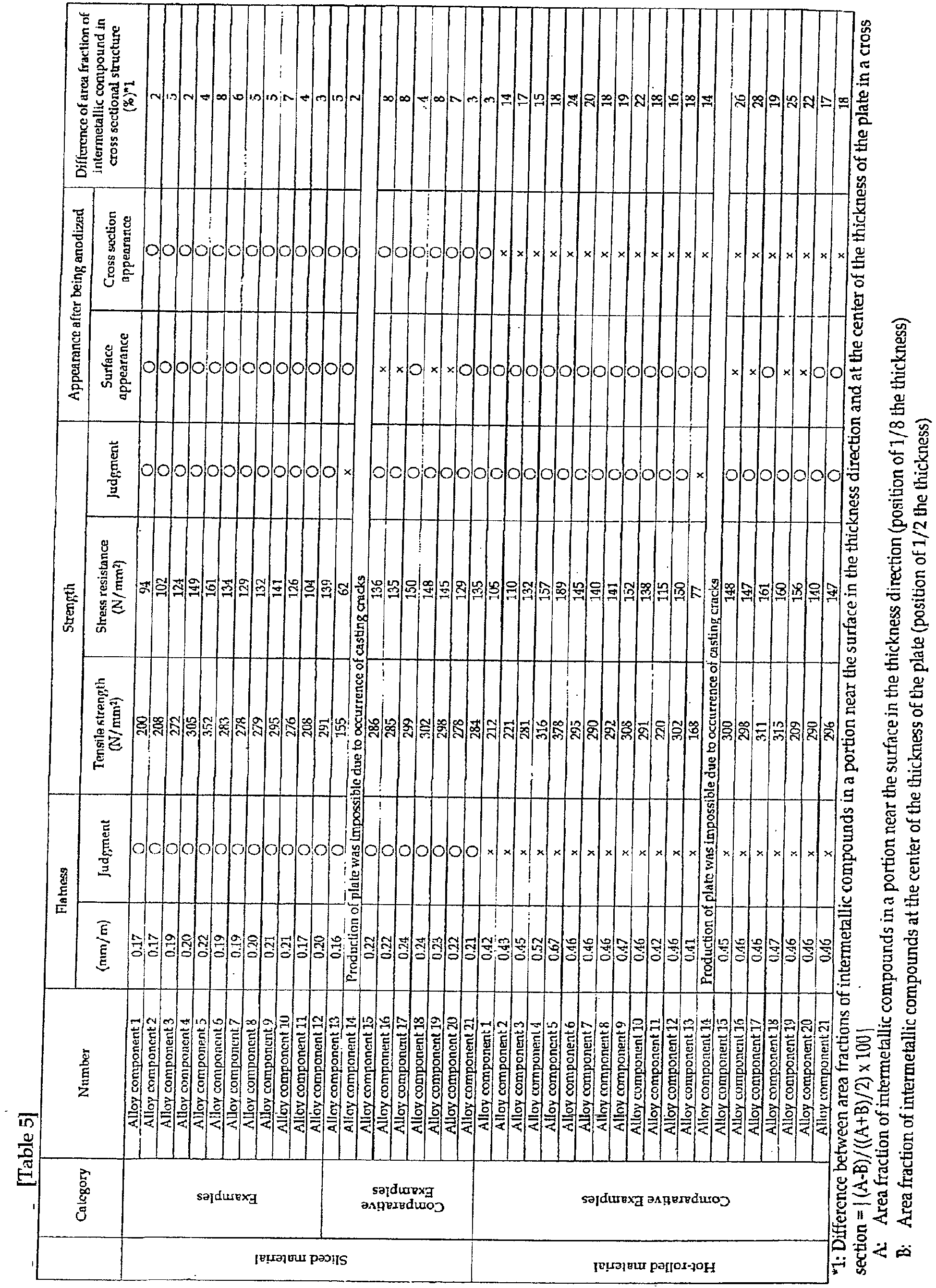

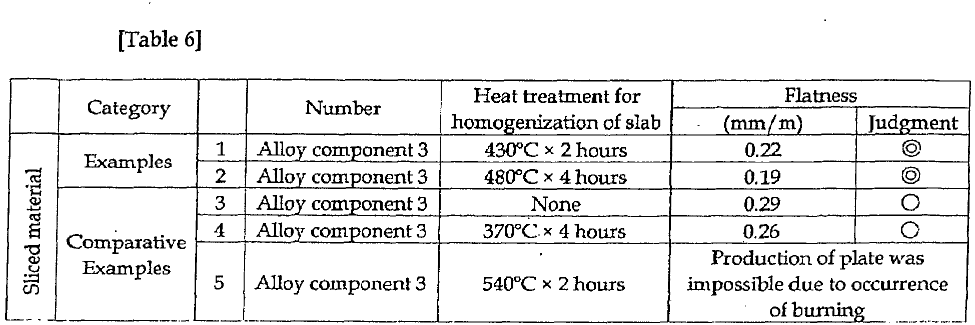

As shown in Table 5, the sliced materials (alloy components 1 to 13 and 15 to 21) had a low degree of process deformation and warping. That is, their flatness was good.

In alloy component 14, since the amount of Mg was above the upper limit, casting cracks occurred and production of a slab was impossible.

In alloy component 13, since the amount of Mg contained was below the lower limit value, strength was insufficient.

Alloy components 1 to 13, 17, 20 and 21 had no irregularity in the appearances of the surfaces of the aluminium alloy thick plates after being anodized.

Since alloy component 15, 16, 18 and 19 contained Si, Fe, Mn and Cr in amounts greater than the respective upper limit values, intermetallic compounds were produced therein. In contrast, as for alloy components 1 to 13 and 15 to 21, in which irregularity occurred in the appearances of the surfaces after being anodized, no irregularity occurred in the appearances of the cross sections of the resulting aluminium alloy thick plates after being anodized.

Meanwhile, hot-rolled materials (alloy components 1 to 13 and 15 to 21) had accumulated process deformation, and had a high degree of warping. That is, their flatness was poor.

In alloy component 14, since the amount of Mg was above the upper limit, casting cracks occurred and production of a slab was impossible.

In alloy component 13, since the amount of Mg contained was below the lower limit value, strength was insufficient.

Since alloy components 15, 16, 18 and 19 contained Si, Fe, Mn and Cr in amounts greater than the respectively upper limit values, intermetallic compounds were produced therein and irregularity occurred in the appearances of their surfaces after being anodized.

As for alloy components 1 to 13 and 15 to 21, irregularity occurred in the appearances of the cross sections of the resulting aluminium alloy thick plates after being anodized.

Moreover, the hot-rolled materials which were produced by hot rolling had the difference between the area fraction of the intermetallic compounds in the portion near the surface and that at the center of the thickness of the plate in a cross section of the plate in the thickness direction greater than 10%.

Alloy components 17, 20 and 21, which are sliced materials, contained Cu, Zn and Ti in amounts greater than their respectively upper limit values, and therefore their effects were saturated and their economical efficiencies are poor.

As shown in Table 6, in Examples 1 and 2, flatness was good since the conditions of the heat treatment for homogenization were within the range of the present invention. In Example 3, no heat treatment for homogenization was carried out. Therefore, although it had an acceptable value of flatness, its flatness was slightly lower than those which were subjected to a heat treatment for homogenization. In Example 4, since the treatment temperature in the heat treatment for homogenization was lower than 400°C, its flatness was slightly lower than that of those which met the condition of the treatment temperature, although it had an acceptable value. In Example 5, burning occurred and production of a slab was impossible.

### Third embodiment (in accordance with the present invention)

The method for manufacturing a thick plate according to claim 3 comprises, as shown in Fig. 1, a melting step (S1), a hydrogen gas removal step (S2), a filtration step (S3), a casting step (S4), and a slicing step (S6), which are carried out in the order stated, wherein after the slicing step, the surface of the sliced aluminium alloy thick plate having a predetermined thickness is further subjected to a surface smoothing treatment (S7). Moreover, the method may comprise, if necessary, a heat treatment step (S5) after the casting step (S4).

Among these steps, the hydrogen gas removal step (S2), filtration step (S3), casting step (S4), slicing step (S6), and the surface smoothing treatment step (S7) are the same as in the manufacturing method of the first embodiment, which is not in accordance with the present invention, and therefore their explanation will be omitted. Only the melting step (S1) and the heat treatment step (S5) will be described below.

### <Melting step>

The melting step (S1) is a step for melting an aluminium alloy containing predetermined amounts of Si and Mg; a predetermined amount of at least one member of Fe, Cu, Mn, Cr, Zn and Ti; and Al and inevitable impurities as the remainder.

The reason why the numerical value of the amount of each component contained is limited will be described below.

### [Si: 0.2% by mass or more but 1.6% by mass or less]

Si has a function to improve the strength of the aluminium alloy. Si is normally contained in the aluminium alloy as an impurity in the ingot, and produces Al-Fe-Si-based and Si-based intermetallic compounds in the casting step (S4) and other steps. When the amount of Si contained is less than 0.2% by mass, its effect in improving strength is low. In contrast, when the amount of Si contained is greater than 1.6% by mass, a coarse Si-based intermetallic compound is produced in the slab, and therefore irregularity in the appearance of the surface of the thick plate after being anodized is likely to occur. Accordingly, the amount of Si contained is to be 0.2% by mass or more but 1.6% by mass or less.

### [Mg: 0.3% by mass or more but 1.5% by mass or less]

Mg has a function to improve the strength of the aluminium alloy by forming Mg2 Si when it coexists with Si. When the amount of Mg contained is less than 0.3% by mass, this effect is low. In contrast, when the amount of Mg contained is greater than 1.5% by mass, the effect in improving strength is saturated. Accordingly, the amount of Mg contained is to be 0.3% by mass or more but 1.5% by mass or less.

The aluminium alloy contains Si and Mg mentioned above as essential components, and further contains at least member of Fe, Cu, Mn, Cr, Zn and Ti described below.

### [Fe: 0.8% by mass or less]

Fe has a function to micronize and stabilize grains of the aluminium alloy, and improve its strength. Fe is also contained normally in the aluminium alloy as an impurity in the ingot, and produces an Al-Fe-based intermetallic compound in the slab in the casting step (S4) and other steps. When the amount of Fe contained is greater than 0.8% by mass, a coarse Al-Fe-based intermetallic compound is produced in the slab, and irregularity in the appearance of the surface of the thick plate after being anodized is likely to occur. Accordingly, the amount of Fe contained is to be 0.8% by mass or less.

### [Cu: 1.0% by mass or less]

Cu has a function to improve the strength of the aluminium alloy plate. When the amount of Cu contained is greater than 1.0% by mass, the corrosion resistance of the plate is lowered. Accordingly, the amount of Cu contained is to be 1.0% by mass or less.

### [Mn: 0.6% by mass or less]

Mn has a function to solidly dissolve in the aluminium alloy and improve its strength. When the amount of Mn contained is greater than 0.6% by mass, coarse intermetallic compounds occur, and irregularity is likely occur in the appearance of the surface of the plate after being anodized. Accordingly, the amount of Mn contained is to be 0.6% by mass or less.

### [Cr: 0.5% by mass or less]

Cr has a function to suppress the growth of grains by being deposited as a fine compound in the casting step (S4) and heat treatment step (S5). When the amount of Cr contained is greater than 0.5% by mass, a coarse Al-Cr-based intermetallic compound is produced as primary crystal, and irregularity in the appearance of the surface of the thick plate after being anodized is likely to occur. Accordingly, the amount of Cr contained is to be 0.5% by mass or less.

### [Zn: 0.4% by mass or less]

Zn has a function to improve the strength of the aluminium alloy, but when it amount is greater than 0.4% by mass, the corrosion resistance of the plate is lowered. Accordingly, the amount of Zn contained is to be 0.4% by mass or less.

### [Ti: 0.1% by mass or less]

Ti has a function to micronize the grains of the slab. When the amount of Ti contained is greater than 0.1% by mass, its effect is saturated. Accordingly, the amount of Ti contained is to be 0.1% by mass or less.

### [Zr: 0.3% by mass or less]

Zr has a function to micronize and stabilize the grains of the aluminium alloy. When the amount of Zr contained is greater than 0.3% by mass, coarse intermetallic compounds are produced, and irregularity in the appearance of the surface of the thick plate after being anodized is likely to occur. Accordingly, the amount of Zr contained is to be 0.3% by mass or less.

Moreover, the amounts of V, B and other elements contained as inevitable impurities do not affect the characteristics of the aluminium alloy thick plate of the present invention as long as they are 0.01% by mass or less, respectively.

### <Heat treatment step>

The heat treatment step (S5) is a step for subjecting the slab produced in the casting step (S4) to a heat treatment (heat treatment for homogenization).

The heat treatment for homogenization is carried out by retaining the slab at a treatment temperature ranging from 400°C to a temperature lower than its melting point for an hour or longer according to a common method.

When the treatment temperature of the heat treatment for homogenization is lower than 400°C, homogenization of the solute element which is segregated in the slab becomes insufficient, and the effect of the heat treatment is small. Therefore, the treatment temperature is to be 400°C or higher. Moreover, when the treatment temperature is higher than the melting point, a phenomenon called burning occurs, in which part of the surface of the slab is melted, which is apt to be a cause of a defect on the surface of the aluminium alloy thick plate. Accordingly, the treatment temperature is to be lower than the melting point. Moreover, when the treatment time is less than 1 hour, solid dissolution of intermetallic compounds becomes insufficient, which makes the intermetallic compounds likely to deposit. Therefore, the treatment time is to be 1 hour or longer.

An aluminium alloy thick plate obtained by the third embodiment of the present invention will be now described.

### <Aluminium alloy thick plate>

The aluminium alloy thick plate comprises the above-mentioned aluminium alloy (Al-Mg-Si-based alloy), in which the concentration of hydrogen is 0.2 ml/100 g or lower, and a difference between the area fraction of intermetallic compounds in a portion hear the surface and that at the center of the thickness of the plate in a cross section in the thickness direction of the plate is 10% or less.

Controlling of the concentration of hydrogen can be also conducted by the manufacturing method mentioned above.

Herein, since the color tone of the thick plate after being anodized varies depending on the area fraction of the Al-Fe-Si-based intermetallic compounds, irregularity of color tone occurs in the thick plate after being anodized when the difference in area fraction is greater than 10%. In contrast, when the difference is 10% or lower, no irregularity in color tone occurs.

That is, in case of a rolled material, since the size of intermetallic compounds increases at the center of the thickness of the plate, irregularity in color tone occurs in a cross section when the thick plate is anodized. However, when the thick plate is sliced out from the slab, the distribution state of the intermetallic compounds is averaged, and the difference in area fraction between the intermetallic compounds near the surface and at the center in the thickness direction is small, and therefore no irregularity in color tone occurs.

Measurement of such area fraction is carried out by determining the area fractions of the intermetallic compounds in a portion near the surface of the plate thickness (for example, defined as a position which is 1/8 the thickness of the plate) and at the center of the thickness of the plate (for example, defined as a position which is 1/2 the thickness of the plate) in a cross section in the thickness direction of the plate.

Specifically, it is carried out by determining the area fractions of an Al-Fe-Si-based intermetallic compound by image processing of an SEM composition image in a cross section in the thickness direction of the plate at a magnification of 1000X and a field of view of 20 fields or more.

As for corrosion resistance, since thick plates for base substrates and for transferring devices are used in clean rooms, they are not required to have generic corrosion resistance. Moreover, even when the thick plate is used for a chamber, severe corrosion resistance is unnecessary since the environment hardly causes the thick plate to be exposed to a corrosive gas.

A suitable embodiment of the present invention has been described above, but the present invention is not limited to this embodiment.

The effects of Examples which fall within the scope of claims of the present invention will be described now in detail in comparison with Comparative Examples which fall outside the scope of claims of the present invention.

### [Example 5]

Initially, aluminium alloys having the chemical compositions shown in Table 7 were melted, and the concentration of hydrogen therein was reduced to 0.2 ml/100 g or lower by the hydrogen gas removal process. Subsequently, filtration was carried out, and the molten metals were then cast to produce slabs having a thickness of 500 mm. The produced slabs were heated at 520°C for 8 hours. These slabs were sliced or hot-rolled, giving aluminium alloy thick plates having a thickness of 20 mm (sliced materials, hot rolled materials). The obtained thick plates were subjected to a solution treatment at 520°C, and to an ageing treatment at 175°C for 8 hours.

These sliced materials and hot-rolled materials were subjected to strength test and anodizability evaluation test.

Since these tests are the same as described in the first embodiment, their explanation is omitted here. However, in the strength test, the materials having a tensile strength of 200 N/mm² or higher and a 0.2% stress resistance of 150 N/mm² or higher were judged acceptable (○), while those having a tensile strength lower than 200 N/mm² and a 0.2% stress resistance lower than 150 N/mm² were judged unacceptable (x). The results are shown in Table 8.

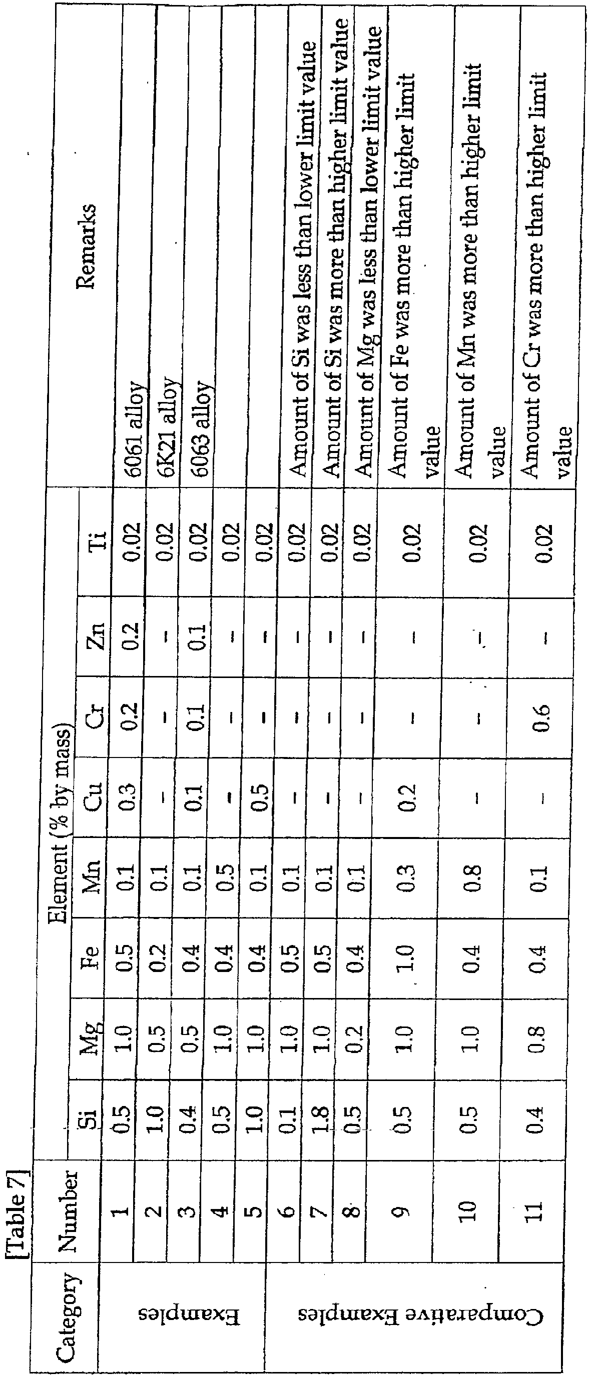

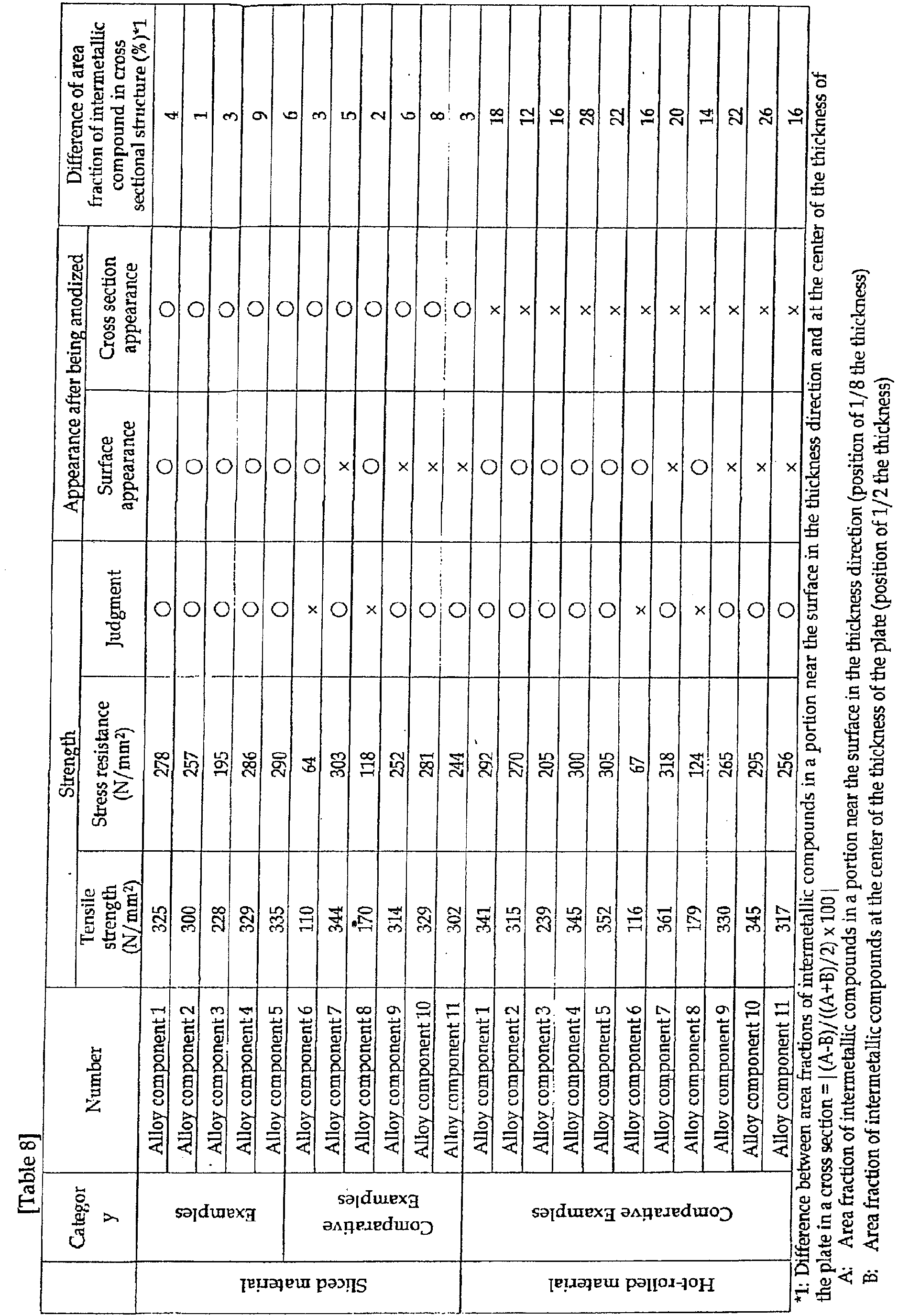

As shown in Table 8, as for the sliced materials, the strengths of alloy components 6, 8 were insufficient since the amounts of Si and Mg contained were below the lower limit value.

Alloy components 1 to 6 and 8 had no irregularity in the appearances of the surfaces of the aluminium alloy thick plates after being anodized.

Since alloy components 7 and 9 to 11 contained Si, Fe, Mn and Cr in amounts greater than the respective upper limit values, intermetallic compounds were produced therein and irregularity occurred in the appearances of their surfaces after being anodized.

As for alloy components 1 to 11, no irregularity occurred in the appearances of the cross sections of the resulting aluminium alloy thick plates after being anodized.

Meanwhile, as for the hot-rolled materials, since the amounts of Si and Mg contained in alloy components 6 and 8 were below the lower limit value, their strengths were insufficient.

Alloy components 1 to 6 and 8 had no irregularity in the appearances of the surfaces of the aluminium alloy thick plates after being anodized.

Since alloy components 7 and 9 to 11 contained Si, Fe, Mn and Cr in amounts greater than the respective upper limit values, intermetallic compounds were produced therein and irregularity occurred in the appearances of their surfaces after being anodized.

As for alloy components 1 to 11, irregularity occurred in the appearances of the cross sections of the resulting aluminium alloy thick plates after being anodized.

Moreover, the hot-rolled materials which were produced by hot rolling had the difference between the area fraction of the intermetallic compounds in the portion near the surface and that at the center of the thickness of the plate in a cross section of the plate in the thickness direction greater than 10%.

### Fourth embodiment (in accordance with the present invention)

The method for manufacturing a thick plate according to claim 5 comprises, as shown in Fig. 1, a melting step (S1), a hydrogen gas removal step (S2), a filtration step (S3), a casting step (S4), and a slicing step (S6), which are carried out in the order stated, wherein after the slicing step, the surface of the sliced aluminium alloy thick plate having a predetermined thickness is further subjected to a surface smoothing treatment (S7). Moreover, the method may comprise, if necessary, a heat treatment step (S5) after the casting step (S4).

These steps, the hydrogen gas removal step (S2), filtration step (S3), casting step (S4), slicing step (S6), and the surface smoothing treatment step (S7) are the same as in the manufacturing method of the first embodiment, which is not in accordance with the present invention, and therefore their explanation will be omitted. Only the melting step (S1) and the heat treatment step (S5) will be described below.

### <Melting step>

The melting step (S1) is a step for melting an aluminium alloy containing predetermined amounts of Mg and Zn; a predetermined amount of at least one member of Si, Fe, Cu, Mn, Cr, Ti and Zr; and Al and inevitable impurities as the remainder.

The reason why the numerical value of the amount of each component contained is limited will be described below.

### [Mg: 0.4% by mass or more but 4.0% by mass or less]

Mg has a function to improve the strength of the aluminium alloy. When the amount of Mg contained is less than 0.4% by mass, this effect is low, while the amount of Mg contained is greater than 4.0% by mass, SCC resistance (resistance to stress corrosion crack) is lowered. Accordingly, the amount of Mg contained is to be 0.4% by mass or more but 4.0% by mass or less.

### [Zn: 3.0% by mass or more but 9.0% by mass or less]

Zn has a function to improve the strength of the aluminium alloy. When the amount of Zn contained is less than 3.0% by mass, this effect is low. Meanwhile, when the amount of Zn contained is greater than 9.0% by mass, SCC resistance (resistance to stress corrosion crack) is lowered. Accordingly, the amount of Zn contained is to be 3.0% by mass or more but 9.0% by mass or less.

The aluminium alloy contains Mg and Zn mentioned above as essential components, and further contains at least one member of Si, Fe, Cu, Mn, Cr, Ti and Zr described below.

### [Si: 0.7% by mass or less]

Si is normally contained in the aluminium alloy as an impurity in the ingot, and produces an Al-Fe-Si-based intermetallic compound in the slab in the casting step (S4) and other steps. When the amount of Si contained is more than 0.7% by mass, a coarse Al-Fe-Si-based intermetallic compound is produced in the slab, and irregularity in the appearance of the surface of the thick plate after being anodized is likely to occur. Accordingly, the amount of Si contained is to be 0.7% by mass or less.

### [Fe: 0.8% by mass or less]

Fe is also contained normally in the aluminium alloy as an impurity in the ingot, and produces an Al-Fe-based intermetallic compound in the slab in the casting step (S4) and other steps. When the amount of Fe contained is greater than 0.8% by mass, a coarse Al-Fe-based intermetallic compound is produced in the slab, and irregularity in the appearance of the surface of the thick plate after being anodized is likely to occur. Accordingly, the amount of Fe contained is to be 0.8% by mass or less.

### [Cu: 3.0% by mass or less]

Cu has a function to improve the strength of the aluminium alloy plate. When the amount of Cu contained is greater than 3.0% by mass, corrosion resistance is lowered. Accordingly, the amount of Cu contained is to be 3.0% by mass or less.

### [Mn: 0.8% by mass or less]

Mn has a function to micronize crystal structures. When the amount of Mn contained is greater than 0.8% by mass, coarse intermetallic compounds occur, and irregularity in the appearance of the surface of the thick plate after being anodized is likely to occur. Accordingly, the amount of Mn contained is to be 0.8% by mass or less.

### [Cr: 0.5% by mass or less]

Cr has a function to suppress the growth of grains by being deposited as a fine compound in the casting step (S4) and heat treatment step (S5). When the amount of Cr contained is greater than 0.5% by mass, a coarse Al-Cr-based intermetallic compound is produced as primary crystal, and irregularity in the appearance of the surface of the thick plate after being anodized is likely to occur. Accordingly, the amount of Cr contained is to be 0.5% by mass or less.

### [Ti: 0.1% by mass or less]

Ti has a function to micronize grains. When the amount of Ti contained is greater than 0.1% by mass, its effect is saturated.

Accordingly, the amount of Ti contained is to be 0.1% by mass or less.

### [Zr: 0.25% by mass or less]

Zr has a function to micronize and stabilize the grains of the aluminium alloy. When the amount of Zr contained is greater than 0.25% by mass, coarse intermetallic compounds are produced, and irregularity in the appearance of the surface of the thick plate after being anodized is likely to occur.

Accordingly, the amount of Zr contained is to be 0.25% by mass or lower.

Moreover, the amounts of V, B and other elements contained as inevitable impurities do not affect the characteristics of the aluminium alloy thick plate of the present invention as long as they are 0.01% by mass or less, respectively.

### <Heat treatment step>

The heat treatment step (S5) is a step for subjecting the slab produced in the casting step (S4) to a heat treatment (heat treatment for homogenization).

The heat treatment for homogenization is carried out by retaining the slab at a treatment temperature ranging from 350°C to a temperature lower than its melting point for an hour or longer according to a common method.

When the treatment temperature of the heat treatment for homogenization is lower than 350°C, homogenization of the solute element which is segregated in the slab becomes insufficient, and the effect of the heat treatment is low. Therefore, the treatment temperature is to be 350°C or higher. Moreover, when the treatment temperature is higher than the melting point, a phenomenon called burning occurs, in which part of the surface of the slab is melted, which is apt to be a cause of a defect on the surface of the aluminium alloy thick plate. Accordingly, the treatment temperature is to be lower than the melting point. Moreover, when the treatment time is less than 1 hour, solid dissolution of the intermetallic compounds becomes insufficient and the intermetallic compounds are likely to deposit. Therefore, the treatment time is to be 1 hour or longer.

The aluminium alloy thick plate obtained by the method according to the present invention will be described now.

### <Aluminium alloy thick plate>

The aluminium alloy thick plate comprises the above-mentioned aluminium alloy (Al-Zn-Mg-based alloy), in which the concentration of hydrogen is 0.2 ml/100 g or lower, and a difference between the area fraction of intermetallic compounds (intermetallic compounds) in a portion near the surface and that at the center of the thickness of the plate in a cross section in the thickness direction of the plate is 10% or less.

Controlling of the concentration of hydrogen can be also conducted by the manufacturing method mentioned above.

Herein, since the color tone of the thick plate after being anodized varies depending on the area fraction of the Al-Fe-Si-(Cu) and Al-Zn-Mg-Cu-based intermetallic compounds, irregularity of color tone occurs in the thick plate after being anodized when the difference in area fraction is greater than 10%. In contrast, when the difference is 10% or lower, no irregularity in color tone occurs.

That is, in case of a rolled material, since the size of the intermetallic compounds increases at the center of the thickness of the plate, irregularity in color tone occurs in a cross section when the thick plate is anodized. However, when the thick plate is sliced out from the slab, the distribution state of the intermetallic compounds is averaged, and the difference in area fraction between the intermetallic compounds near the surface and that at the center in the thickness direction is small, and therefore no irregularity in color tone occurs.

Measurement of such area fraction is carried out by determining the area fractions of the intermetallic compounds in a portion near the surface of the plate thickness (for example, defined as a position which is 1/8 the thickness of the plate) and at the center of the thickness of the plate (for example, defined as a position which is 1/2 the thickness of the plate) in a cross section in the thickness direction of the plate).

Specifically, the measurement is carried out by determining the area fractions of the Al-Fe-Si-(Cu) and Al-Zn-Mg-Cu-based intermetallic compounds in a cross section in the thickness direction of the plate by image processing of an SEM composition image at a magnification of 1000X and a field of view of 20 fields or more.

A suitable embodiment of the present invention has been described above, but the present invention is not limited to this embodiment.

The effects of Examples which falls within the scope of claims of the present invention will be described now in detail in comparison with Comparative Examples which fall outside the scope of claims of the present invention.

### [Example 6]

Initially, aluminium alloys having the chemical compositions shown in Table 9 were melted, and the concentration of hydrogen was reduced to 0.2 ml/100 g or lower by the hydrogen gas removal process. Subsequently, the molten metals were filtrated and cast to produce slabs having a thickness of 300 mm. The produced slabs were heated at 450°C for 8 hours to subject them to a heat treatment for homogenization. These slabs were sliced or hot-rolled, giving aluminium alloy thick plates having a thickness of 20 mm (sliced materials, hot rolled materials). The obtained thick plates were subjected to a solution treatment at 470°C, and were subjected to an ageing treatment at 120°C for 48 hours.

These sliced materials and hot-rolled materials were subjected to strength test and anodizability evaluation test.

Since these tests are the same as described in the first embodiment, their explanation is omitted here. However, in the strength test, the materials having a tensile strength of 250 N/mm² or higher and a 0.2% stress resistance of 200 N/mm² or higher were judged acceptable (o), while those having a tensile strength lower than 250 N/mm² and a 0.2% stress resistance lower than 200 N/mm² were judged unacceptable (x). The results are shown in Table 10.

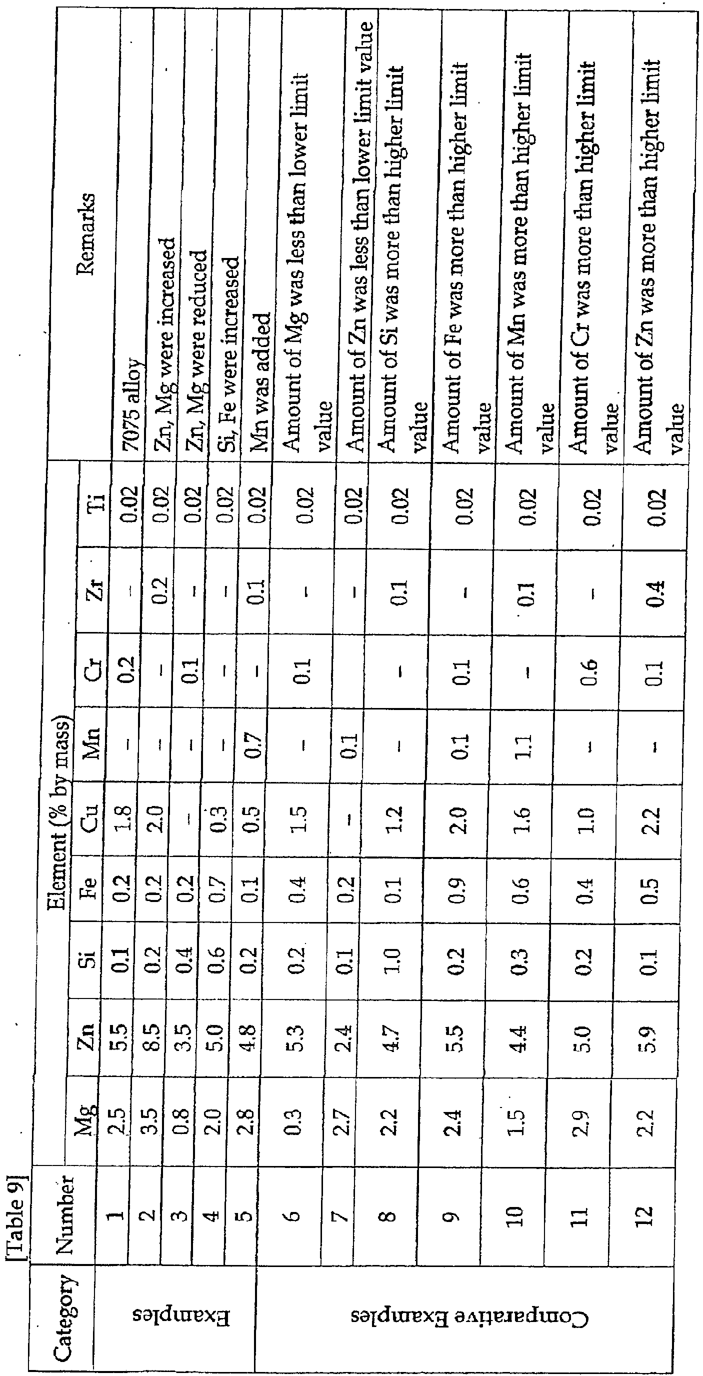

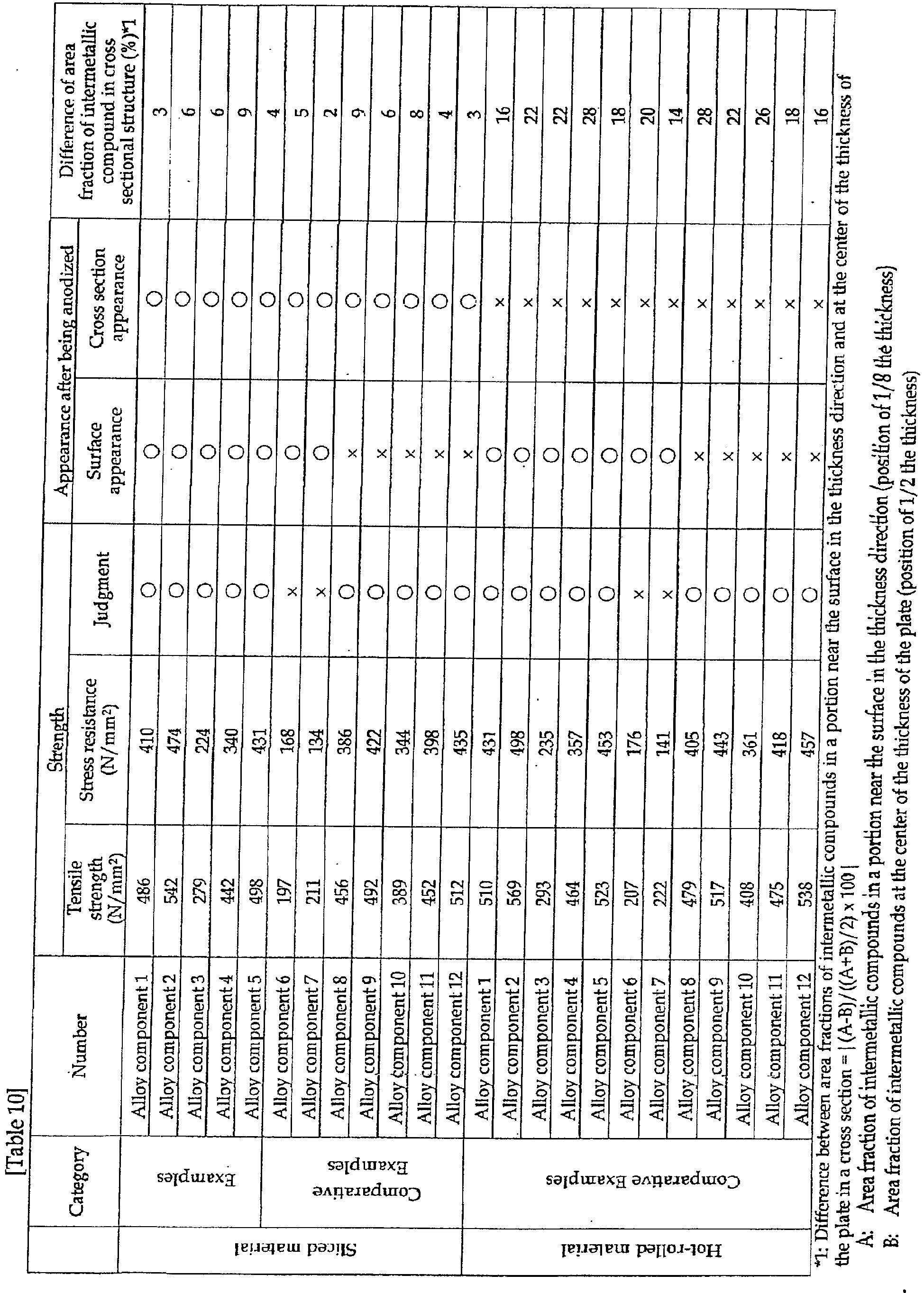

As shown in Table 10, as for the sliced materials, the strengths of alloy components 6, 7 were insufficient since the amounts of Mg and Zn contained were below the lower limit values.

Alloy components 1 to 7 had no irregularity in the appearances of the surfaces of the aluminium alloy thick plates after being anodized.

Since alloy components 8 to 12 contained Si, Fe, Mn, Cr and Zr in amounts greater than the respective upper limit values, intermetallic compounds were produced therein and irregularity occurred in the appearances of their surfaces after being anodized.

As for alloy components 1 to 12, no irregularity occurred in the appearances of the cross sections of the resulting aluminium alloy thick plates after being anodized.

Meanwhile, as for the hot-rolled materials, the strengths of alloy components 6 and 7 were insufficient since the amounts of Mg and Zn contained were below the lower limit values.

Alloy components 1 to 7 had no irregularity in the appearances of the surfaces of the aluminium alloy thick plates after being anodized.

Since alloy component 8 to 12 contain Si, Fe, Mn, Cr and Zr in amounts greater than the respective upper limit values, intermetallic compounds were produced therein and irregularity occurred in the appearances of their surfaces after being anodized.

As for alloy components 1 to 12, irregularity occurred in the appearances of the cross sections of the resulting aluminium alloy thick plates after being anodized.

Moreover, the hot-rolled materials which were produced by hot rolling had the difference between the area fraction of the intermetallic compounds in the portion near the surface and that at the center of the thickness of the plate in a cross section of the plate in the thickness direction greater than 10%.

Suitable embodiments of the present invention have been described above, but the present invention is not limited to these embodiments, and modifications may be made in such a range that does not deviate from the scope of the claims.

## Claims

1. A method for manufacturing an aluminium alloy thick plate, the method comprising:
a melting step for melting an aluminium alloy;
a hydrogen gas removal step for removing hydrogen gas from the aluminium alloy melted in the melting step;
a filtration step for removing mediators from the aluminium alloy from which hydrogen gas is removed in the hydrogen gas removal step;
a casting step for casting the aluminium alloy from which the mediator is removed in the filtration step to produce a slab; and
a slicing step for slicing the slab in the cast direction into a predetermined thickness, which are carried out in the order stated,
wherein after the slicing step, the surface of the sliced aluminium alloy thick plate having a predetermined thickness is further subjected to a surface smoothing treatment,
wherein the aluminium alloy is composed of the following components: Mg: 1.5% by mass or more but 12.0% by mass or less; at least one member of Si: 0.7% by mass or less, Fe: 0.8% by mass or less, Cu: 0.6% by mass or less, Mn: 1.0% by mass or less, Cr: 0.5% by mass or less, Zn: 0.4% by mass or less, Ti: 0.1% by mass or less, and Zr: 0.3% by mass or less; and Al and inevitable impurities as the remainder.

2. The method for manufacturing an aluminium alloy thick plate according to claim 1, wherein the slab is subjected to a heat treatment in which it is retained at a temperature ranging from 400°C to a temperature lower than its melting point for an hour or longer after the casting step.

3. A method for manufacturing an aluminium alloy thick plate, the method comprising:
a melting step for melting an aluminium alloy;
a hydrogen gas removal step for removing hydrogen gas from the aluminium alloy melted in the melting step;
a filtration step for removing mediators from the aluminium alloy from which hydrogen gas is removed in the hydrogen gas removal step;
a casting step for casting the aluminium alloy from which the mediator is removed in the filtration step to produce a slab; and
a slicing step for slicing the slab in the cast direction into a predetermined thickness, which are carried out in the order stated,
wherein after the slicing step, the surface of the sliced aluminium alloy thick plate having a predetermined thickness is further subjected to a surface smoothing treatment,
wherein the aluminium alloy is composed of the following components: Si: 0.2% by mass or more but 1.6% by mass or less; Mg: 0.3% by mass or more but 1.5% by mass or less; at least one member of Fe: 0.8% by mass or less, Cu: 1.0% by mass or less, Mn: 0.6% by mass or less, Cr: 0.5% by mass or less, Zn: 0.4% by mass or less, Ti: 0.1% by mass or less, and Zr: 0.3% by mass or less; and Al and inevitable impurities as the remainder.

4. The method for manufacturing an aluminium alloy thick plate according to claim 3, wherein the slab is subjected to a heat treatment in which it is retained at a temperature ranging from 400°C to a temperature lower than its melting point for an hour or longer after the casting step.

5. A method for manufacturing an aluminium alloy thick plate, the method comprising:
a melting step for melting an aluminium alloy;
a hydrogen gas removal step for removing hydrogen gas from the aluminium alloy melted in the melting step;
a filtration step for removing mediators from the aluminium alloy from which hydrogen gas is removed in the hydrogen gas removal step;
a casting step for casting the aluminium alloy from which the mediator is removed in the filtration step to produce a slab; and
a slicing step for slicing the slab in the cast direction into a predetermined thickness, which are carried out in the order stated,
wherein after the slicing step, the surface of the sliced aluminium alloy thick plate having a predetermined thickness is further subjected to a surface smoothing treatment,
wherein the aluminium alloy is composed of the following components: Mg: 0.4% by mass or more but 4.0% by mass or less; Zn: 3.0% by mass or more but 9.0% by mass or less; at least one member of Si: 0.7% by mass or less, Fe: 0.8% by mass or less, Cu: 3.0% by mass or less, Mn: 0.8% by mass or less, Cr: 0.5% by mass or less, Ti: 0.1% by mass or less, and Zr: 0.25% by mass or less, and Al and inevitable impurities as the remainder.

6. The method for manufacturing an aluminium alloy thick plate according to claim 5, wherein the slab is subjected to a heat treatment in which it is retained at a temperature ranging from 350°C to a temperature lower than its melting point for an hour or longer after the casting step.

7. The method for manufacturing an aluminium alloy thick plate according to any one of claims 1 to 6, wherein the surface smoothing treatment is at least one member selected from cutting, grinding and polishing.

## Patentansprüche

1. Verfahren zur Herstellung einer dicken Aluminiumlegierungsplatte, wobei das Verfahren umfaßt:
einen Schmelzschritt zum Schmelzen einer Aluminiumlegierung,
einen Wasserstoffgas-Entfernungsschritt zum Entfernen von Wasserstoffgas von der Aluminiumlegierung, geschmolzen in dem Schmelzschritt,
einen Filtrationsschritt zum Entfernen von Mediatoren aus der Aluminiumlegierung, von welcher Wasserstoffgas in dem Wasserstoffgas-Entfernungsschritt entfernt worden ist,
einen Gießschritt zum Gießen der Aluminiumlegierung, von welcher der Mediator in dem Filtrationsschritt entfernt worden ist, um einen Stab herzustellen, und
einen Schneidschritt zum Schneiden des Stabs in der Gießrichtung in eine vorbestimmte Dicke, welche in der vorstehenden Reihenfolge durchgeführt werden,
wobei nach dem Schneidschritt die Oberfläche der geschnittenen dicken Aluminiumlegierungsplatte mit einer vorbestimmten Dicke weiter einer Oberflächenglättungsbehandlung unterworfen wird,
wobei die Aluminiumlegierung aus den folgenden Komponenten aufgebaut ist: Mg: 1,5 Masse-% oder mehr, aber 12,0 Masse-% oder weniger; mindestens einem Element von Si: 0,7 Masse-% oder weniger, Fe: 0,8 Masse-% oder weniger, Cu: 0,6 Masse-% oder weniger, Mn: 1,0 Masse-% oder weniger, Cr. 0,5 Masse-% oder weniger, Zn: 0,4 Masse-% oder weniger, Ti: 0,1 Masse-% oder weniger, und Zr: 0,3 Masse-% oder weniger, und Al und unvermeidbare Verunreinigungen als dem Rest.

2. Verfahren zur Herstellung einer dicken Aluminiumlegierungsplatte gemäß Anspruch 1, wobei der Stab einer Wärmebehandlung unterworfen wird, worin er bei einer Temperatur im Bereich von 400°C bis zu einer Temperatur niedriger als dessen Schmelzpunkt für eine Stunde oder länger nach dem Gießschritt gehalten wird.

3. Verfahren zur Herstellung einer dicken Aluminiumlegierungsplatte, wobei das Verfahren umfaßt:
einen Schmelzschritt zum Schmelzen einer Aluminiumlegierung,
einen Wasserstoffgas-Entfernungsschritt zum Entfernen von Wasserstoffgas von der Aluminiumlegierung, geschmolzen in dem Schmelzschritt,
einen Filtrationsschritt zum Entfernen von Mediatoren aus der Aluminiumlegierung, von welcher Wasserstoffgas in dem Wasserstoffgas-Entfernungsschritt entfernt worden ist,
einen Gießschritt zum Gießen der Aluminiumlegierung, von welcher der Mediator in dem Filtrationsschritt entfernt worden ist, um einen Stab herzustellen, und
einen Schneidschritt zum Schneiden des Stabs in der Gießrichtung in eine vorbestimmte Dicke, welche in der vorstehenden Reihenfolge durchgeführt werden,
wobei nach dem Schneidschritt die Oberfläche der geschnittenen dicken Aluminiumlegierungsplatte mit einer vorbestimmten Dicke weiter einer Oberflächenglättungsbehandlung unterworfen wird,
wobei die Aluminiumlegierung aus den folgenden Komponenten aufgebaut ist: Si: 0,2 Masse-% oder mehr, aber 1,6 Masse-% oder weniger, Mg: 0,3 Masse-% oder mehr, aber 1,5 Masse-% oder weniger, mindestens einem Element von Fe: 0,8 Masse-% oder weniger, Cu: 1,0 Masse-% oder weniger, Mn: 0,6 Masse-% oder weniger, Cr: 0,5 Masse-% oder weniger, Zn: 0,4 Masse-% oder weniger, Ti: 0,1 Masse-% oder weniger, und Zr: 0,3 Masse-% oder weniger und Al und unvermeidbare Verunreinigungen als dem Rest.

4. Verfahren zur Herstellung einer dicken Aluminiumlegierungsplatte gemäß Anspruch 3, wobei der Stab einer Wärmebehandlung unterworfen wird, worin er bei einer Temperatur im Bereich von 400°C bis zu einer Temperatur niedriger als dessen Schmelzpunkt für eine Stunde oder länger nach dem Gießschritt gehalten wird.

5. Verfahren zur Herstellung einer dicken Aluminiumlegierungsplatte, wobei das Verfahren umfaßt:
einen Schmelzschritt zum Schmelzen einer Aluminiumlegierung,
einen Wasserstoffgas-Entfernungsschritt zum Entfernen von Wasserstoffgas von der Aluminiumlegierung, geschmolzen in dem Schmelzschritt,
einen Filtrationsschritt zum Entfernen von Mediatoren aus der Aluminiumlegierung, von welcher Wasserstoffgas in dem Wasserstoffgas-Entfernungsschritt entfernt worden ist,
einen Gießschritt zum Gießen der Aluminiumlegierung, von welcher der Mediator in dem Filtrationsschritt entfernt worden ist, um einen Stab herzustellen, und
einen Schneidschritt zum Schneiden des Stabs in der Gießrichtung in eine vorbestimmte Dicke, welche in der vorstehenden Reihenfolge durchgeführt werden,
wobei nach dem Schneidschritt die Oberfläche der geschnittenen dicken Aluminiumlegierungsplatte mit einer vorbestimmten Dicke weiter einer Oberflächenglättungsbehandlung unterworfen wird,
wobei die Aluminiumlegierung aus den folgenden Komponenten aufgebaut ist: Mg: 0,4 Masse-% oder mehr, aber 4,0 Masse-% oder weniger, Zn: 3,0 Masse-% oder mehr, aber 9,0 Masse-% oder weniger, mindestens einem Element von Si: 0,7 Masse-% oder weniger, Fe: 0,8 Masse-% oder weniger, Cu: 3,0 Masse-% oder weniger, Mn: 0,8 Masse-% oder weniger, Cr: 0,5 Masse-% oder weniger, Ti: 0,1 Masse-% oder weniger und Zr: 0,25 Masse-% oder weniger, und Al und unvermeidbare Verunreinigungen als dem Rest.

6. Verfahren zur Herstellung einer dicken Aluminiumlegierungsplatte gemäß Anspruch 5, wobei der Stab einer Wärmebehandlung unterworfen wird, worin er bei einer Temperatur im Bereich von 350°C bis zu einer Temperatur niedriger als dessen Schmelzpunkt für eine Stunde oder länger nach dem Gießschritt erhalten wird.

7. Verfahren zur Herstellung einer dicken Aluminiumlegierungsplatte gemäß einem der Ansprüche 1 bis 6, wobei die Oberflächenglättungsbehandlung mindestens ein Mitglied, ausgewählt aus Schneiden, Abschleifen und Polieren, ist.

## Revendications

1. Procédé de fabrication d'une plaque épaisse en alliage d'aluminium, le procédé comprenant :
une étape de fusion destinée à faire fondre un alliage d'aluminium ;
une étape d'élimination d'hydrogène gazeux destinée à éliminer l'hydrogène gazeux de l'alliage d'aluminium fondu à l'étape de fusion ;
une étape de filtration destinée à éliminer des médiateurs de l'alliage d'aluminium duquel l'hydrogène gazeux a été éliminé à l'étape d'élimination d'hydrogène gazeux ;
une étape de coulée destinée à couler l'alliage d'aluminium à partir duquel le médiateur a été retiré à l'étape de filtration afin de produire une plaque ; et
une étape de tranchage destinée à trancher la plaque dans la direction de coulée suivant une épaisseur prédéterminée, qui sont mises en œuvre suivant l'ordre cité,
dans lequel, après l'étape de tranchage, la surface de la plaque épaisse en alliage d'aluminium tranchée présentant une épaisseur prédéterminée est en outre soumise à un traitement de lissage de surface,
dans lequel l'alliage d'aluminium est composé des constituants suivants : du Mg : 1,5 % en masse ou plus mais jusqu'à 12,0 % en masse ou moins ; au moins un élément parmi le Si : 0,7 % en masse ou moins, le Fe: 0,8 % en masse ou moins, le Cu : 0,6 % en masse ou moins, le Mn : 1,0 % en masse ou moins, le Cr : 0,5 % en masse ou moins, le Zn : 0,4 % en masse ou moins, le Ti : 0,1 % en masse ou moins, et le Zr : 0,3 % en masse ou moins ; et de l'Al et des impuretés inévitables en tant que complément.

2. Procédé de fabrication d'une plaque épaisse en alliage d'aluminium selon la revendication 1, dans lequel la plaque est soumise à un traitement thermique dans lequel elle est maintenue à une température comprise entre 400°C et une température inférieure à son point de fusion, pendant une heure ou plus, après l'étape de coulée.

3. Procédé de fabrication d'une plaque épaisse en alliage d'aluminium, le procédé comprenant :
une étape de fusion destinée à faire fondre un alliage d'aluminium ;
une étape d'élimination d'hydrogène gazeux destinée à éliminer l'hydrogène gazeux de l'alliage d'aluminium fondu à l'étape de fusion ;
une étape de filtration destinée à éliminer des médiateurs de l'alliage d'aluminium duquel l'hydrogène gazeux a été éliminé à l'étape d'élimination d'hydrogène gazeux ;
une étape de coulée destinée à couler l'alliage d'aluminium à partir duquel le médiateur a été retiré à l'étape de filtration afin de produire une plaque ; et
une étape de tranchage destinée à trancher la plaque dans la direction de coulée suivant une épaisseur prédéterminée, qui sont mises en œuvre suivant l'ordre cité,
dans lequel, après l'étape de tranchage, la surface de la plaque épaisse en alliage d'aluminium tranchée présentant une épaisseur prédéterminée est en outre soumise à un traitement de lissage de surface,
dans lequel l'alliage d'aluminium est composé des constituants suivants : du Si : 0,2 % en masse ou plus mais jusqu'à 1,6 % en masse ou moins ; du Mg : 0,3 % en masse ou plus mais jusqu'à 1,5 % en masse ou moins ; au moins un élément parmi le Fe : 0,8 % en masse ou moins, le Cu : 1,0 % en masse ou moins, le Mn : 0,6 % en masse ou moins, le Cr : 0,5 % en masse ou moins, le Zn : 0,4 % en masse ou moins, le Ti : 0,1 % en masse ou moins, et le Zr: 0,3 % en masse ou moins ; et de l'Al et des impuretés inévitables en tant que complément.

4. Procédé de fabrication d'une plaque épaisse en alliage d'aluminium selon la revendication 3, dans lequel la plaque est soumise à un traitement thermique dans lequel elle est maintenue à une température comprise entre 400°C et une température inférieure à son point de fusion, pendant une heure ou plus, après l'étape de coulée.

5. Procédé de fabrication d'une plaque épaisse en alliage d'aluminium, le procédé comprenant :
une étape de fusion destinée à faire fondre un alliage d'aluminium ;
une étape d'élimination d'hydrogène gazeux destinée à éliminer l'hydrogène gazeux de l'alliage d'aluminium fondu à l'étape de fusion ;
une étape de filtration destinée à éliminer des médiateurs de l'alliage d'aluminium duquel l'hydrogène gazeux a été éliminé à l'étape d'élimination d'hydrogène gazeux ;
une étape de coulée destinée à couler l'alliage d'aluminium à partir duquel le médiateur a été retiré à l'étape de filtration afin de produire une plaque ; et
une étape de tranchage destinée à trancher la plaque dans la direction de coulée suivant une épaisseur prédéterminée, qui sont mises en œuvre suivant l'ordre cité,
dans lequel, après l'étape de tranchage, la surface de la plaque épaisse en alliage d'aluminium tranchée présentant une épaisseur prédéterminée est en outre soumise à un traitement de lissage de surface,
dans lequel l'alliage d'aluminium est composé des constituants suivants : du Mg : 0,4 % en masse ou plus mais jusqu'à 4,0 % en masse ou moins ; du Zn: 3,0 % en masse ou plus mais jusqu'à 9,0 % en masse ou moins ; au moins un élément parmi le Si : 0,7 % en masse ou moins, le Fe: 0,8 % en masse ou moins, le Cu : 3,0 % en masse ou moins, le Mn: 0,8% en masse ou moins, le Cr: 0,5% en masse ou moins, le Ti : 0,1 % en masse ou moins et le Zr: 0,25 % en masse ou moins, et de l'Al et des impuretés inévitables en tant que complément.

6. Procédé de fabrication d'une plaque épaisse en alliage d'aluminium selon la revendication 5, dans lequel la plaque est soumise à un traitement thermique dans lequel elle est maintenue à une température comprise entre 350°C et une température inférieure à son point de fusion pendant une heure ou plus après l'étape de coulée.

7. Procédé de fabrication d'une plaque épaisse en alliage d'aluminium selon l'une quelconque des revendications 1 à 6, dans lequel le traitement de lissage de surface est au moins une opération sélectionnée parmi l'usinage, le meulage et le polissage.
